# EUROPEAN PATENT APPLICATION

(11) **EP 4 226 892 A1**
(43) Date of publication of application: **16.08.2023**
(21) Application number: 21876778.8
(22) Date of filing: 27.09.2021
(51) Int. Cl.: A61C 8/00, A61C 9/00

(54) **MULTI-FUNCTIONAL PROSTHETIC COMPONENT FOR CONVENTIONAL OR DIGITAL WORKFLOW FOR INSTALLING A DENTAL PROSTHESIS ON AN IMPLANT**

(30) Priority: 07.10.2020 BR 102020020599
(71) Applicant: JJGC Indústria E Comércio De Materiais Dentários S.A., 81270-200 Curitiba - PR (BR)
(72) Inventor: THOMÉ, Geninho, 80240- 170 Curitiba-PR (BR); BERNARDES, Sergio Rocha, 81220- 110 Curitiba - PR (BR); CHAVES, Thiago Cabral Meira, 81450-280 Curitiba - PR (BR); NUNES, Maria Augusta Rodrigues Pereira, 80730-360 Curitiba PR (BR); LUCCA, Ilderaldo José, 82400-000 Curitiba - PR (BR); FONSECA JR, Gilberto Aparecido Pinto da, 83323-120 Pinhais - PR (BR)
(74) Representative: Elzaburu S.L.P.
(86) International application number: PCT/BR2021/050411
(87) International publication number: WO 2022/073088

(57) **Abstract**

This invention belongs to the field of implantology and comprises a multifunctional prosthetic component (1, 10) developed to have multiple functions within the conventional or digital workflow, in which a temporary or permanent prosthesis is made for a dental rehabilitation unit that is cemented or screwed on a dental implant. Thus, the component has a geometry that allows it to be used as a (i) conventional closed tray transfer, (ii) conventional open tray transfer, scanbody, and temporary abutment, basically comprising three main regions: a lower region (2), an intermediate region (3) and an upper region (4), being also able to cooperate with a positioner cap (6, 7).

## Description

The present invention belongs to the field of odontology, more precisely implantology, and comprises a prosthetic component developed to have multiple functions within the conventional or digital workflow to build a temporary or definitive prosthesis for single dental rehabilitation, which can be cemented or screwed on a dental implant. Thus, the component has a geometry that allows it to be used as a (i) conventional closed tray transfer, (ii) conventional open tray transfer, (iii) scanbody and (iv) temporary abutment, mainly aiming at facilitating and optimizing the workflow of implantology's professionals.

### DESCRIPTION OF PRIOR ART

As is known to those skilled in the art, the installation of a dental implant to restore the masticatory and aesthetic functions of an edentulous patient involves several steps, ranging from the alveolus perforation to the installation of the permanent prosthesis.

After the implant installation, the professional needs to determine the exact location and precise orientation of the implant installed in the patient's edentulous region bone bed, so that the prosthesis can be made in such a way as to promote a perfect fit and alignment in relation to the adjacent teeth.

There are two methods to guide the preparation of the prosthesis: conventional and digital. The conventional method requires the preparation of a gypsum model (or other appropriate material) of the patient's dental arch. This technique uses an open or closed tray transfer that is coupled to the implant prior to placement of the impression material that, once solidified, will provide an accurate record of the position and alignment of the implant in a negative temporary model that, with the aid of a component analogous to the implant, will allow the production of a positive model identical to the patient's arch. This technique requires said transfer to have predefined characteristics such as, for example, cutouts, protrusions, or constrictions to promote better retention in the impression material.

The digital method involves scanning an image of the patient's dental arch geometry. With the aid of softwares that operate CAD/CAM systems, the files containing the geometry information are read, and create a precise three-dimensional representation of the patient's dental arch that will be used to guide the construction of the temporary or permanent prosthesis. However, capturing this geometry requires the coupling of a digitalization agent (commonly referred to as a scanbody) to the implant (or intermediate component), wherein this scanbody needs to have certain characteristics to enable the scanner to capture the precise geometry of the region - which can be done intraorally or using a gypsum model.

Therefore, to find out the correct implant position and direction, it is necessary to use at least one of the following three different components: scanbody, open tray transfer, and closed tray transfer. Then, to ensure that, in the event of any unforeseen event during this step, the implantologist can immediately use another strategy to complete the procedure, the professional must have all these components in the clinic during the surgery.

In addition, we must bear in mind that in the time frame between collecting the implant position data and concluding the permanent prosthesis production, it is possible to install in the patient's mouth a temporary prosthesis or a prefabricated tooth to be cemented on a temporary abutment, remembering that depending on the position and characteristics of the teeth positioned adjacent to the edentulous region, it is important for said component to be adjustable in height. Therefore, in addition to the three components (scanbody, open tray transfer and closed tray transfer) necessary to capture the data, the professional must also have one more prosthetic component to complete the first installation step. It is important to emphasize that when the digital flow is adopted, the existence of the components used in the software libraries ensures that the designed prosthesis is absolutely precise, which is why the use of prosthetic components with various adjustable heights is so important, since cuts made without precise indications may result in components with non-existent dimensions in these libraries, which may cause problems during installation of the prosthesis.

In the current technique there are some components, such as implant mounters, that also perform other functions. Patent US8794966 describes a mounting component that, after being used to install the implant in the socket, can act as a closed tray transfer and, upon cutting and removing its distal end, can still act as a temporary abutment. Document US9833300 also discloses an implant mounter that additionally acts as a closed tray transfer and, after cutting its distal end, can be used to receive the permanent prosthesis. Also document BR1020133027205 (of the same Assignee as this case) disclosed a component that, in addition to being used as a conventional assembler, can also be used as a transfer or as a prosthetic component by cutting and removing its distal end. However all these components have dual functions, one of them being the installation of the implant; due to that, to use it as a scanbody, tray transfer and base for installation of the temporary prosthesis, the difficulties are practically the same as previously reported, since in some cases the complementary functions are only achieved with the coupling of additional parts, or requiring specific components, such as scanbodies, for example.

A component that does not have a mounter function and operates as a scanbody and temporary abutment was described in document US2018/132977. However, it cannot be directly coupled to the implant and, therefore, requires the prior installation of an additional intermediate component before starting the prosthesis production. In addition, the portion that acts as a temporary abutment does not allow the user to do height adjustments, which can cause limitations to its use. In addition, the professional will still need to provide an open and/or closed tray transfer to complete the procedure.

Similarly, document US2018/0353267 discloses a component with a dual function since it can be used as a scanbody and an open or closed tray transfer. However, in this case the implantologist will still need the temporary abutment to complete the procedure.

Therefore, it is noted that the current technique lacks a multifunctional component that can perform, in a single piece, the functions of scanbody, tray transfer and temporary abutment to make the implantologist workflow become more agile, practical, and economic.

### OBJECTIVES OF THE INVENTION

Therefore, this invention aims to provide an effective solution to make the implantologist's procedure more practical and optimized while identifying the correct position of the implant installed in the patient's jaw or maxilla, in order to guide the subsequent preparation of the temporary or permanent prosthesis.

Thus, it is one of the objectives of the invention to provide a multifunctional component that can be installed directly on the implant or on the analog, without requiring the use of intermediate components.

Another objective of this invention is to present a component having an original geometry that can perform the functions of (i) scanbody, (ii) open tray transfer, (iii) closed tray transfer and (iv) be used as a temporary abutment.

The multifunctional component of this invention may also be used in digital workflows that use physical models produced with open or closed tray, in addition to using an intraoral scanner.

One objective of this invention is to provide a multifunctional component that, besides the functions it performs with its original shape, can still perform complementary functions by coupling complementary parts. Therefore, one objective of this invention is to provide a component which, upon the coupling of a positioner cap in its upper interface region, can be used as a closed tray transfer in one of the possible embodiments.

Finally, one of the objectives of this invention is to provide a component whose surface is adequately treated to ensure perfect scanning conditions and, thereby, optimize scanning.

### Summary of the invention

Therefore, this invention relates to a multifunctional prosthetic component for conventional or digital workflow, to install an implant supported dental prosthesis, comprising a component that can be removably attached to an implant or analog, consisting of: a lower region comprising a lower interface geometry which cooperates with the implant interface, wherein said lower interface has, in the bottom portion, an anti-rotational element, and in the upper portion it has a transmucosal region; and an intermediate region comprising an abutment (or a prosthetic element) of a substantially tapered shape supported by a tapered seating region that is attached to the upper end of the transmucosal region, wherein said abutment has a top surface; the multifunctional component being characterized by the fact that an upper region defined by at least one upper interface structure comprising a hole for coupling a screw that cooperates with the implant, wherein the upper interface comprises at least one vertical facet; the joining portion between the intermediate region and the upper region configures a cutting location to separate the upper region from the abutment. Said multifunctional component can be used as a conventional closed tray transfer, a conventional open tray transfer, a scanbody and a temporary abutment.

Said abutment comprises: a body of a substantially tapered shape supported by the tapered seating region; at least one top surface; at least one perimeter groove and at least one substantially vertical facet, and the upper interface structure comprises at least one neck linked to the top surface, wherein said neck supports at least one substantially trapezoidal body which supports a substantially cylindrical body with flat top surface. The upper interface may further comprise at least one groove on its median horizontal axis.

At least one vertical facet of the upper interface is vertically aligned with the facet of the abutment, and additionally the vertical facets of said multifunctional component upper interface can be rotationally indexed with the anti-rotational element along the longitudinal axis of the multifunctional component. Furthermore, at least one perimeter groove of the abutment configures a cut-off marking to adjust the height of the prosthetic component; and the lower interface geometry comprises one of the following interfaces: morse cone, external hexagon, or internal hexagon.

The intermediate region and the upper region of the multifunctional component comprise a surface treated with a material that enables scanning with intraoral or benchtop scanning equipment. In addition, the intermediate region and the upper region of the multifunctional component have a microscopically modified surface to enable geometric recognition when using intraoral or benchtop scanning equipment; the facets of the abutment are vertical from the top to its medial portion, wherein in the lower portion, from medial portion of the abutment, such facets begin to be softly concave until they reach the tapered seating region, wherein at least one facet of the abutment is indexed to at least one face of the anti-rotational element of the lower region. Alternatively, the upper portion of the abutment can present a smaller cross-section than the cross-section of the region located below the perimeter groove.

The invention further comprises a positioner cap comprising, on its inner wall, at least one perimeter shoulder that cooperates with the groove of the upper interface of the multifunctional component, when using a closed tray impression technique, wherein the perimeter shoulder of the positioner cap cooperates with the groove of the upper interface by one of the following means: interference, pressure, or male-female coupling.

The multifunctional prosthetic component also comprises a long screw for attaching the multifunctional component to the implant when using an open tray impression technique.

Another possible embodiment of the multifunctional prosthetic component of this invention comprises a component that can be removably attached to an implant or analog, comprising: a lower region comprising a lower interface geometry cooperating with the implant interface, wherein the bottom of said lower interface is linked to an anti-rotational element and the top of said lower interface is linked to a transmucosal region; an intermediate region comprising an abutment supported by a tapered seating region which is attached to the upper end of the transmucosal region, wherein said abutment has a top surface and comprises at least one substantially vertical facet; and a screw, the component being characterized in that it comprises: an upper region defined by at least one upper interface structure comprising at least one groove, and a hole for coupling a screw that cooperates with the implant, the upper interface comprising at least one vertical facet, and a positioner cap attached to the upper surface of the interface by means of breakable structures, wherein said positioner cap has on its inner wall at least one perimeter shoulder that cooperates with the groove of the upper interface of the multifunctional component when the multifunctional component is pressed against the positioner cap and the breakable structures break, allowing the component to move until the positioner cap is properly coupled to the upper interface; wherein the union portion between the intermediate region and the upper region configures a cutting location to separate the upper region from the abutment.

The invention also addresses some installation methods, the first of which is a method of installing an immediate loading prosthesis through the conventional open tray workflow using the multifunctional prosthetic component described herein, comprising the following steps: (100) install the implant in the surgical alveolus; (105) attach the component to the implant using the long screw; (110) create an impression of the patient's arch using an open tray filled with a dental impression composition; (115) after the appropriate waiting period, remove the long screw; (120) remove the tray containing the multifunctional component (1, 10) from inside the patients' mouth; (125) optional step: install a healing abutment or cover screw on the implant while the temporary prosthesis is being produced; (130) start of the prosthetic procedure: attach an analog to the multifunctional component and cast the gypsum to prepare the model of the patient's dental arch; (135) after the waiting period, remove the gypsum model containing the analog from inside the impression mold, the multifunctional component (1, 10) remaining attached to the impression (gypsum model); (140) remove the component from the impression mold; (145) with the aid of an appropriate dental tool, cut the top surface of the multifunctional component to make the prosthetic component has a height of 6 mm, or make said cut in the groove to make the component has a height of 4 mm; (150) make and attach the temporary prosthesis on the multifunctional component already shaped as a temporary abutment, being this the end of the prosthetic procedure; (155) only if step (125) was performed: remove the healing abutment or cover screw from the implant; (160) by cementing or screwing, attach the multifunctional component acting as a temporary abutment to the implant.

Another method is the immediate loading prosthesis installation through the conventional closed tray workflow comprising the steps as follows: (100) install the implant in the surgical alveolus; (205) attach the component to the implant using the screw; (210) couple the positioner cap to the component; (215) create the impression using a closed tray; (220) remove, from inside the patient's mouth, the tray containing the positioner cap; (225) remove the screw and the component from the implant; (230) optional step: install a healing abutment or cover screw on the implant while the temporary prosthesis is being produced; (235) start of the prosthetic procedure: attach an analog to the multifunctional component; (240) couple the 'component + analog' set to the positioner cap located is inside the model, and cast the gypsum; (245) remove the gypsum model from inside the mold; (250) uncouple the component from the analog that was attached to the model; (255) with the aid of an appropriate dental tool, cut the top surface of the multifunctional component to make the prosthetic component has a height of 6 mm, or make said cut in the groove to make said component has a height of 4 mm; (260) make and/or attach the temporary prosthesis to the multifunctional component already shaped as a temporary abutment, being this the end of the prosthetic procedure; (265) only if step (230) was performed: remove the healing abutment or cover screw from the implant; (270) by cementing or screwing, attach the multifunctional component acting as a temporary abutment in the implant.

There is also the method of installing the through the fast workflow, characterized by the fact that it comprises the following steps: (100) install the implant in the surgical alveolus; (305) with the aid of an appropriate dental tool, cut the top surface of the multifunctional component until the prosthetic component has a height of 6 mm, or make said cut in the groove until said component has a height of 4 mm; (310) make and/or attach a temporary prosthesis to the multifunctional component already shaped as a temporary abutment; (315) by cementing or screwing, attach the multifunctional component acting as a temporary abutment on the implant.

There is also the method of installing the immediate loading prosthesis through the digital workflow using an intraoral scanner, characterized by the fact that it comprises the following steps: (100) install the implant in the surgical alveolus; (405) Attach the component to the implant using the screw; (410) scan the patient's dental arch using an intraoral scanner; (415) remove the screw and the component from the implant; (420) optional step: install a healing abutment or cover screw over the implant while the temporary prosthesis is being produced; (425) start of the prosthetic procedure: make the digital design of the temporary prosthesis using a computer and an appropriate software; (430) produce the temporary prosthesis on a milling machine or 3D printer; (435) with the aid of an appropriate dental tool, cut the top surface of the multifunctional component until the prosthetic component has a height of 6 mm, or make said cut in the groove until said component has a height of 4 mm; (440) attach the temporary prosthesis on the component already shaped as a temporary abutment, being this the end of the prosthetic procedure; (445) only if step (420) was performed: remove the healing abutment or cover screw from the implant; (450) by cementing or screwing, attach the multifunctional component acting as a temporary abutment on the implant.

The method of installing an immediate loading prosthesis through the digital workflow using open tray and a benchtop scanner is characterized in that it comprises the following steps: (100) install the implant in the surgical alveolus; (505) attach the component to the implant using the long screw; (510) create a impression using an open tray; (515) remove the long screw; (520) remove the tray containing the component from inside the patient's mouth; (525) optional step: install a healing abutment or cover screw on the implant while the temporary prosthesis is being made; (530) start of the prosthetic procedure: attach an analog to the component and cast the gypsum in the mold; (535) remove the gypsum model containing the analog from inside the mold in which the component remains attached; (540) remove the component from the impression; (545) couple the component to the analog to act as a scanbody, and scan the model using a benchtop scanner; (550) create the digital temporary prosthesis using a computer and an appropriate software; (555) produce the temporary prosthesis on a milling machine or 3D printer; (560) with the aid of an appropriate dental tool, cut the top surface of the multifunctional component to make the prosthetic component have a height of 6 mm, or make said cut in the groove to make said temporary component have a height of 4 mm; (565) attach the temporary prosthesis to the component already shaped as a prosthetic component, being this the end of the prosthetic procedure; (570) only if step (525) was performed: remove the healing abutment or cover screw from the implant; (575) by cementing or screwing, attach the multifunctional component acting as a temporary abutment on the implant.

Another possibility is the immediate loading prosthesis installation method through the digital workflow using a closed tray technique and a benchtop scanner, characterized in that it comprises the following steps: (100) install the implant in the surgical socket; (605) attach the component to the implant using the screw; (610) couple the positioner cap to the component; (615) create the impression using a closed tray; (620) remove, from inside the patient's mouth, the tray containing the positioner cap; (625) remove the screw and the component from the implant; (630) optional step: install a healing abutment or cover screw on the implant while the temporary prosthesis is being made; (635) start of the prosthetic procedure: attach an analog to the component; (640) Couple the 'component + analog' set to the positioner cap that is inside the model, and cast the gypsum; (645) remove the gypsum model from inside the impression mold; (650) scan the model having the component acting as a scanbody, using a benchtop scanner; (655) uncouple the component from the analog that was attached to the model; (660) create the digital temporary prosthesis using a computer and an appropriate software; (665) produce the temporary prosthesis on a milling machine or 3D printer; (670) with the aid of an appropriate dental tool, cut the top surface of the multifunctional component until the prosthetic component has a height of 6 mm, or make said cut in the groove to make said component have a height of 4 mm; (675) attach the temporary prosthesis to the component already shaped as a prosthetic component, being this the end of the prosthetic procedure; (680) only if step (630) has been performed: remove the healing abutment or cover screw from the implant; (685) by cementing or screwing, attach the multifunctional component acting as a temporary abutment on the implant.

The installation method using the conventional open tray workflow and the multifunctional prosthetic component is characterized in that it comprises the following steps: (700) install the implant in the surgical alveolus for the two-steps procedure, and then install a healing abutment or cover screw on the implant to wait until the appropriate osseointegration period has elapsed; (705) at the end of the osseointegration period, remove the healing abutment or cover screw from the implant; (710) attach the component to the implant using the long screw; (715) create an open tray impression; (720) remove the long screw; (725) remove the tray containing the component from inside the patient's mouth; (730) optional step: reinstall the healing abutment or cover screw on the implant until the permanent prosthesis has been made; (735) start of the prosthetic procedure: attach an analog to the component and cast the gypsum; (740) remove the gypsum model containing the analog from inside the mold, in which the component remains attached; (745) remove the component from the impression mold; (750) select the most appropriate prosthetic component for the case; (755) produce and attach the permanent prosthesis on the chosen prosthetic component, being this the end of the prosthetic procedure; (760) only if step (730) was performed: remove the healing abutment or cover screw from the implant; (765) by cementing or screwing, attach the component containing the permanent prosthesis to the implant.

The two-step prosthesis installation method using the conventional closed tray workflow is characterized in that it comprises the following steps: (700) install the implant in the surgical alveolus for the two-steps procedure, and then install a healing abutment or cover screw on the implant to wait until the appropriate osseointegration period has elapsed; (805) at the end of the osseointegration period, remove the healing abutment or cover screw from the implant; (810) attach the component to the implant using the screw; (815) couple the positioner cap to the component; (820) create the impression using a closed tray; (825) remove, from inside the patient's mouth, the tray containing the positioner cap; (830) remove the screw and the component from the implant; (835) optional step: reinstall the healing abutment or cover screw on the implant until the permanent prosthesis has been produced; (840) start of the prosthetic procedure: attach an analog to the component; (845) couple the 'component + analog' set to the positioner cap that is inside the impression mold and cast the gypsum; (850) remove the gypsum model from inside the impression mold; (855) uncouple the component from the analog that was attached to the model; (860) select the most appropriate prosthetic component for the case; (865) produce and attach the permanent prosthesis to the prosthetic component, being this the end of the prosthetic procedure; (870) only if step (835) was performed: remove the healing abutment or cover screw from the implant; (875) by cementing or screwing, attach the component containing the permanent prosthesis in the implant.

The two-step prosthesis installation method through the digital workflow using a benchtop scanner and the multifunctional prosthetic component is characterized in that it comprises the following steps: (700) install the implant in the surgical alveolus for the two-step procedure, and then install a healing abutment or cover screw on the implant to wait until the appropriate osseointegration period has elapsed; (1000) at the end of the osseointegration period, remove the healing abutment or cover screw from the implant; (1005) attach the component to the implant using the long screw; (1010) create the open tray impression; (1015) remove the long screw; (1020) remove the tray containing the component from inside the patient's mouth; (1025) optional step: reinstall the healing abutment or cover screw over the implant until the permanent prosthesis has been produced; (1030) start of the prosthetic procedure: attach an analog to the component and cast the gypsum; (1035) remove the gypsum model containing the analog from inside the mold, in which the component remains attached; (1040) remove the component from the impression mold; (1045) couple the component to the analog to act as a scanbody, and scan the model using a benchtop scanner; (1050) create the digital permanent prosthesis using a computer and an appropriate software; (1055) produce the permanent prosthesis on a milling machine or 3D printer; (1060) select the most appropriate prosthetic component for the case; (1065) attach the permanent prosthesis to the selected prosthetic component, being this the end of the prosthetic procedure; (1070) only if step (1025) was performed: remove the healing abutment or cover screw from the implant; (1075) by cementing or screwing, attach the component containing the permanent prosthesis to the implant.

Finally, there is the two-step prosthesis installation method through the digital workflow using a closed tray benchtop scanner, comprising the following steps: (700) install the implant in the surgical alveolus for the two-step procedure, and then install a healing abutment or cover screw on the implant to wait until the appropriate osseointegration period has elapsed; (1100) at the end of the osseointegration period, remove the healing abutment or cover screw from the implant; (1105) attach the component to the implant using the screw; (1110) couple the positioner cap to the component; (1115) create the closed tray impression; (1120) remove, from inside the patient's mouth, the tray containing the attached positioner cap; (1125) remove the screw and the component from the implant; (1130) optional step: install a healing abutment or cover screw on the implant, until the permanent prosthesis has been produced; (1135) start of the prosthetic procedure: attach an analog to the component; (1140) couple the 'component + analog' set to the positioner cap that is inside the impression mold, and cast the gypsum; (1145) remove the gypsum model containing the analog from inside the impression mold, in which the component remains coupled; (1150) scan the model, which has the component acting as a scanbody, using a benchtop scanner; (1155) uncouple the component from the analog that was attached to the model; (1160) Create a digital permanent prosthesis using a computer and an appropriate software; (1165) produce the permanent prosthesis on a milling machine or 3D printer; (1170) select the appropriate prosthetic component for the case; (1175) attach the permanent prosthesis to the selected prosthetic component, being that the end of the prosthetic procedure; (1180) only if step (1130) was performed: remove the healing abutment or cover screw from the implant; (1185) by cementing or screwing, attach the component containing the permanent prosthesis on the implant.

### BRIEF DESCRIPTION OF THE DRAWINGS

Below this invention will be described in more detail, based on a preferred example embodiment represented in the appended figures, in which:
Fig. 1.1 shows a perspective view of the multifunctional prosthetic component according to a first preferred embodiment of the invention;
Fig. 1.2 shows a front view of the component of Fig.1.1 positioned beside the coronal region of an implant, providing visualization of the component region that will interface with the implant and the transmucosal region;
Fig. 2 shows a perspective view of a second preferred embodiment of the multifunctional component of this invention;
Fig. 3 shows a side view of the multifunctional component depicted in Figs. 1.1 and 1.2;
Fig. 4 shows a front view of a third preferred embodiment of the invention, configured for use as scanbody;
Fig. 5 shows a front view of the multifunctional prosthetic component of Fig. 4, but configured for use as an open tray transfer - for this purpose, it uses a long screw to attach to the implant;
Fig. 6 shows a front view of the multifunctional prosthetic component illustrated in Fig. 4, but configured to be used as a closed tray transfer; for this purpose, it uses a positioner cap coupled to its distal end;
Fig. 7.1 shows a perspective view of the multifunctional component of this invention, adapted for use as a prosthetic component, since the distal portion of its body was cut and removed;
Fig. 7.2 shows the component of Fig. 7.1 modified by the cut and removal of its the distal region, made to reduce the final height of the prosthetic component;
Fig. 8 shows an exploded perspective view of the prosthetic component shaped as a closed tray transfer, which acts with the positioner cap;
Fig. 9 shows an enlarged detail of the interface between the multifunctional prosthetic component and the positioner cap;
Fig. 10 shows a longitudinal cut of the multifunctional prosthetic component of the present invention;
Fig. 11 shows the cut of Fig. 10 having a long screw (for use as an open tray transfer) properly positioned therein;
Fig. 12 shows another possible embodiment of the multifunctional prosthetic component, in which the component and the positioner cap form a single element;
Fig. 13 shows a schematic indication of the interconnection between the various flowcharts that represent the steps of the usage methods of the component of this invention for making a temporary prosthesis for immediate loading;
Fig. 13.1 depicts the steps of a conventional workflow for making and installing a temporary prosthesis using an open tray;
Fig. 13.2 depicts the steps of a conventional workflow for making and installing temporary prosthesis using a closed tray;
Fig. 13.3 depicts the steps of a fast workflow for preparing and installing a temporary prosthesis for immediate loading;
Fig. 13.4 depicts the steps of a digital workflow for the temporary prosthesis preparation using an intraoral scanner;
Fig. 13.5 depicts the steps of a digital workflow for making a temporary prosthesis using a benchtop scanner with the open tray technique;
Fig. 13.6 depicts the steps of a digital workflow for making a temporary prosthesis using a benchtop scanner with the closed tray technique;
Fig. 14 shows a schematic indication of the interconnection between the various flowcharts that represent the steps of the usage methods of the component of this invention to install a permanent prosthesis in two steps - the first for installing the implant and closing it with cover screw and healing abutment, and the second for scanning and producing the permanent prosthesis;
Fig. 14.1 depicts the steps of a two-step workflow for making and installing a permanent prosthesis using an open tray;
Fig. 14.2 depicts the steps of a two-step workflow for making and installing a permanent prosthesis using a closed tray;
Fig. 14.3 depicts the steps of a two-step digital workflow for producing a permanent prosthesis using an intraoral scanner;
Fig. 14.4 depicts the steps of a two-step digital workflow for producing a permanent prosthesis using a benchtop scanner with the open tray technique, and
Fig. 14.5 depicts the steps of a two-step digital workflow for producing a permanent prosthesis using a benchtop scanner with the closed tray technique.

### DETAILED DESCRIPTION OF THE INVENTION

The object of this invention will be described and explained in more detail based on the accompanying drawings, which have a merely exemplary and nonlimiting nature, since adaptations and modifications can be made without changing the scope of the claimed protection.

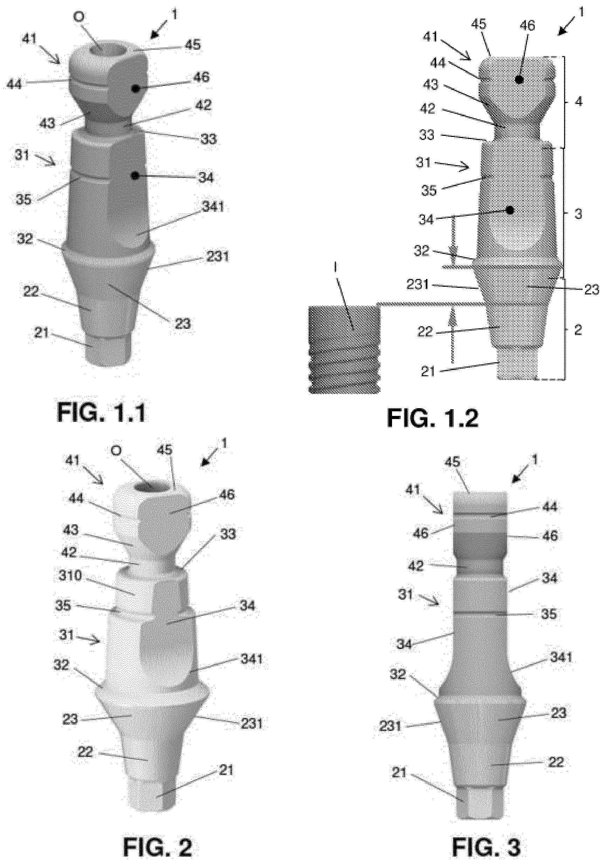

In a preferred embodiment, the multifunctional prosthetic component for conventional or digital workflow object of this invention basically comprises a component **1** that can be removably attached to an implant **I** or analog (not shown), and is preferably indicated to act as a (i) conventional closed or open tray transfer, to transfer the implant position and orientation to the gypsum model; (ii) scanbody, to be used in the mouth or mounted on the gypsum model to transfer the implant position and orientation through an intraoral or benchtop scanner, in order to create a digital model; and (iii) single (and preferably temporary) prosthetic component, which can also be used for permanent restorations screwed or cemented on implants installed in the patient's maxilla or jaw. Said component **1** comprises a single body consisting of three main regions: a lower region **2,** an intermediate region **3** and an upper region **4,** as illustrated in Figure 1.2 attached herein.

The lower region **2** comprises the lower interface geometry **22** that cooperates with implant I, having its bottom attached to an anti-rotational element **21,** and its top attached to a transmucosal region **23,** i.e., positioned outside the coronal region of the implant **I** (see Fig. 1.2), and in direct contact with the patient's mucosa. In the accompanying exemplary figures, the lower interface geometry **22** has inclined profiles compatible with "morse cone" implants, however the component **1** may alternatively present any other lower interface geometry as needed. The anti-rotational element **21** has, in a preferred embodiment of the invention, a male hexagonal shape that cooperates with the female region of the same conformation existing inside the implant **I.** It is worth noting that such geometry may vary, as long as it prevents relative movement between the component **1** and implant **I** after the parts have been coupled.

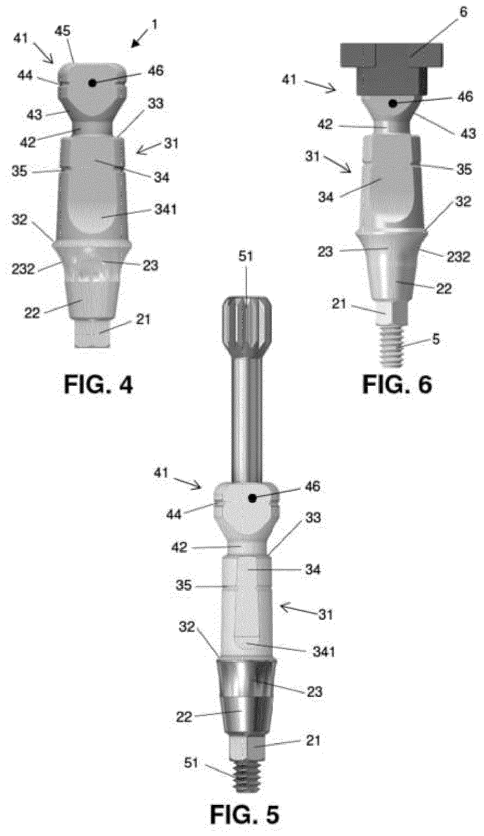

In the first preferred embodiment of the invention, which is depicted in Figures 1.1, 1.2 and 3, the transmucosal region **23** has a tapered shape of increasing diameter towards the intermediate region **3** and, therefore, its side walls **231** are tapered. Obviously, the transmucosal region **23** can present heights ranging from 0.1 mm to 7 mm (preferably with 1.5, 2.5 and 3.5 mm) and/or curved profiles **232** (as, for example, illustrated in the attached Figures 4 to 8 in which such profiles **232** are concave) without deviating from the scope of protection claimed herein.

The intermediate region **3** comprises the cementable portion of component **1,** corresponding to the temporary abutment **31** to be used during the period prior to the installation of the permanent prosthesis, and which preferably has a conical seat **32** to facilitate the adaptation of the temporary prosthesis, in addition to being attached to the upper end of the transmucosal region **23.** In Figure 1.2, it can be clearly seen that the cementable portion of the temporary abutment **31** also has a substantially tapered shape with a decreasing diameter from the conical seat **32** to the top surface **33,** consequently presenting a shape that assists in the correct installation of the temporary crown when cementing. In addition, said temporary abutment **31** has, in each of the front and rear portions, facets **34** that are vertical from the top **33** to its medial portion, from where they begin presenting a light concavity **341.** It should be clarified that such facets **34** aim to prevent rotational movement of the temporary crown about the longitudinal axis of the component **1,** and to direct the component **1** during the reinsertion of the impression material. Besides that, along the longitudinal axis of component **1,** the facets **34** are indexed in relation with the faces of the anti-rotational element **21,** wherein the angulation between the anti-rotational element **21** and at least one of the facets **34** may vary between 0 and 360° (preferably 90°). This function is of paramount importance for the component **1** to accurately perform the function of transmitting the implant rotational element position to the impression (open or closed), or when scanning the dental arch geometry.

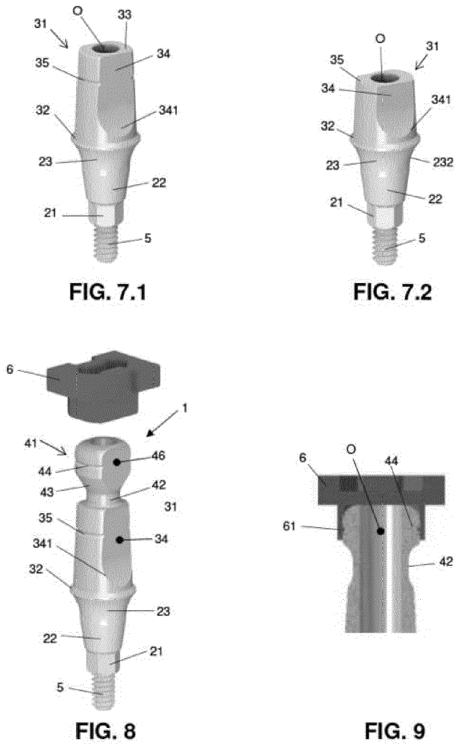

To use the multifunctional component **1** as a temporary abutment **31,** it is initially necessary for the implantologist to cut the component **1** in the neck region **42,** i.e., above the top surface **33.** Once this is done, the cementable portion (comprising the region between the lower end of the conical seat **32** and the top **33;** see Figure 7.1) of the temporary abutment **31** will have 6.0 mm height; however, at a height of 4.0 mm from the conical seat **32,** there is a perimeter recess or groove **35** that configures a cut marking to guide the implantologist to cut the part in case the prosthetic needs require the use of a component with a lower height (in this case, with 4mm). Figure 7.2 shows the component **1** after being cut in the perimeter groove **35.**

Figure 2 shows an alternative embodiment of this invention, in which the upper portion **310** of the temporary abutment **31** (which lies between the perimeter groove **35** and the top surface **33**) has a reduced diameter, resulting in an alternative shape that is also beneficial to the prosthesis retention.

In the upper region **4** of component **1,** over the top surface **33,** there is a cylindrical neck **42** that supports a trapezoidal shaped structure **43** over which an upper interface **41** defined by a substantially cylindrical body provided with a recess or groove **44** on its median horizontal axis is positioned. The upper interface **41** extends until a flat surface **45** in which it is possible to see the coupling hole **O** for the fixing screw **5** or **51** and, moreover, has vertical facets **46** in the front and rear parts, which are rotationally indexed with the anti-rotational element **21** along the longitudinal axis of component **1.**

It is important to clarify that the geometries of the temporary abutment **31,** the neck **42** and the upper interface **41** were designed to enable the accurate scanning of component **1** installed in the mouth or on a patient's dental arch model (i.e., for the geometry scanning using an intraoral or benchtop scanner). To this end, in the region located above the transmucosal portion **23** such elements receive a specific surface treatment that optimizes the scanning process and makes it possible to precisely obtain the position and orientation of implant **I** in the three-dimensional representation of the computer manipulable dental arch. Thus, and as illustrated in Figures 1 to 4, the component **1** of this invention acts as a scanbody to allow that, through a specific software linked to a CAD/CAM system, the professional can define the best strategy in terms of component adoption and selection / impression of the permanent prosthesis to be used in each case.

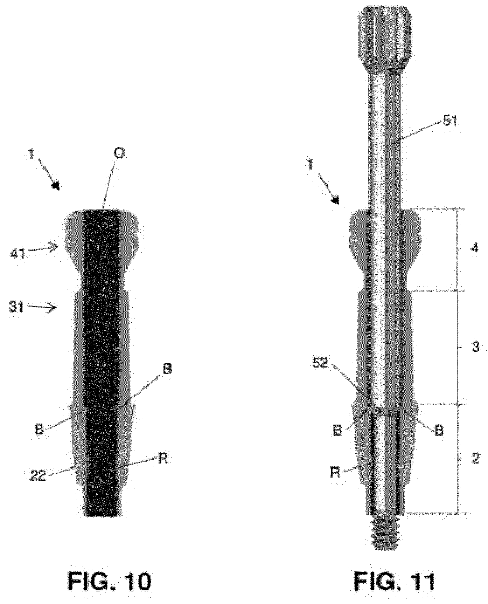

It should also be clarified that, as illustrated in Figures 10 and 11, in the inner recess of hole **O** that receives screw **5, 51,** the multifunctional component **1** has recess, a diameter funneling in the lower region **2,** formed by a stop **B** that acts as a seat for the tapered portion **52** of the screw **5, 51,** which also presents a reduction in diameter in its lower portion. Complementarily, this narrower part of hole **O** also has a threaded inner portion **R** to prevent the screw **5, 51** from escaping from the inside of component **1** after being placed completely inside of it.

However, there are surgical procedures that, instead of using the scanning system, require the manufacture of conventional physical models of the patient's dental arch, which are usually made of gypsum or other materials of similar physical properties. In these cases, before casting the gypsum, a "negative" representation of the dental arches must be collected and that is done by using trays filled with a dental putty that is compressed against the patient's teeth. As a result, for the component **1** to be used as an open or closed tray transfer to reflect the correct and precise position of the previously installed implant in the models, some adaptations that will be presented below must be made.

The use of the multifunctional component as an open tray transfer requires a screw longer than conventional, to remain with one end external and accessible after the tray is filled with the material that, after taking the arch impression, will conform the patient's dental arch model. To this end, and as illustrated in Figures 5 and 11, a long screw **51** is coupled to component **1** before starting the dental impression process of the patient's arch, i.e., the component **1** described above remains the same, but its coupling to the implant **I** will require the use of the long screw **51** when using this impression technique.

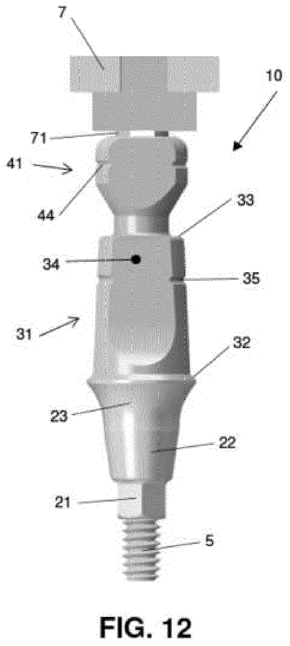

On the other hand, using the closed tray technique to create the dental impression model requires the coupling of an additional element to component **1:** a positioner cap **6, 7** as shown in Figures 6, 8, 9 and 12. Said positioner cap **6,** 7 may be provided separately from the component **1** (Figs. 6, 8, and 9), or removably attached to it (see Fig. 12).

The positioner cap **6** is already widely known in implantology and, in the invention presented herein, it can optionally be used by the implantologist, according to his/her preference or surgical need. As shown in Figure 9, the inner wall of the positioner cap **6** used in this invention comprises a perimeter shoulder **61** that can be fixed by pressure (snap-fit) to the recess or groove **44** existing at the upper interface **41** of component **1.** In this regard, it should be emphasized that both the perimeter shoulder **61** and the recess or groove **44** can have any geometric configuration, provided that they can couple to each other. Thus, to use component **1** as a closed tray transfer, one just needs to attach component **1** to the implant **I** and then couple the positioner cap **6** to the upper interface **41** of component **1.** Once this is done, the professional can start the process of creating the patient's dental arch impression.

Another embodiment of this invention is illustrated in Figure 12, and comprises a positioner cap **7** made in conjunction with the multifunctional component **10,** i.e., in the form of a single and monolithic piece that, however, has breakable structures **71** that have fragile points to allow such structures **71** to break so that the upper interface **41** engages the positioner cap **7** when the component **1** is pressed against the positioner cap **7,** which must be done prior to creating the impression model. Thus, once the impression of the patient's dental arch geometry using a closed tray is completed, it will be possible to remove component **10** from the impression mold, although the positioner cap **7** remains inside it to assist in the future steps of the procedure. Additionally, to use the multifunctional component **10** as an open tray transfer, the user simply has to apply a pressure movement to break the structures **71** and remove the positioner cap **7** to, thereby, access the hole **O** in which the long screw **51** shall be coupled. It is important to emphasize that in the attached figure **12** a preferred geometry was presented, but several other geometries and conformations of breakable structures can be used without deviating from the scope of protection claimed herein. It should also be noted that in this configuration the multifunctional component **10** is a unitary part that can be used as: (i) a closed tray transfer, (ii) an open tray transfer, (iii) a scanbody and (iv) a temporary abutment.

It is important to note that the tightening of the component **1** promoted by the neck **42** that supports the upper interference element **41** was thus shaped to promote better retention of the impression material when using the part as an open or closed tray transfer that accurately shows the position and direction of the implant to the gypsum model, and also to facilitate the process of removing the geometry **41** when using the component **1** as a temporary abutment.

In short, the multifunctional prosthetic component **1** according to the preferred embodiment illustrated in Figures 1 to 12, can be used in dental prosthesis installation techniques for (i) immediate loading with a temporary component or (ii) two-steps prosthesis installation.

### I. Use of the multifunctional component 1 in immediate loading dental prosthesis installation techniques using a temporary abutment and a temporary prosthesis

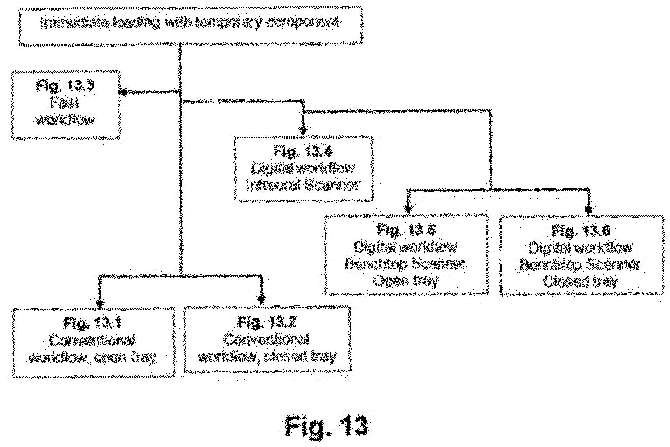

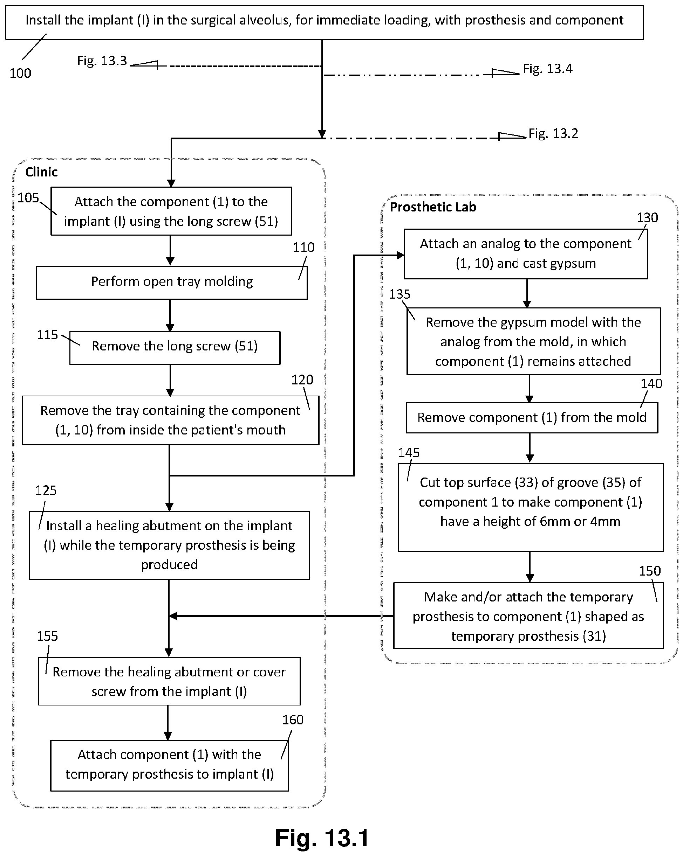

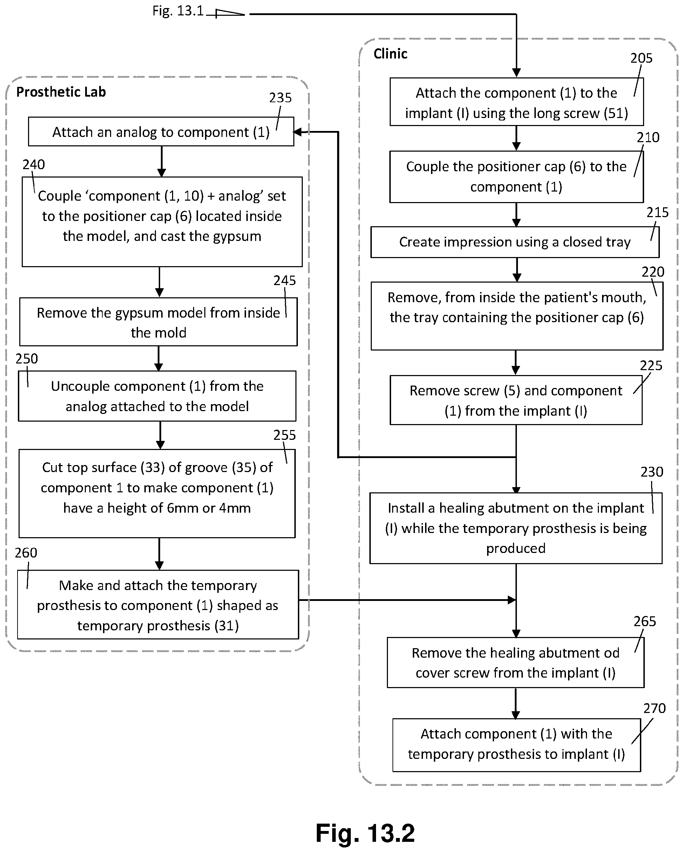

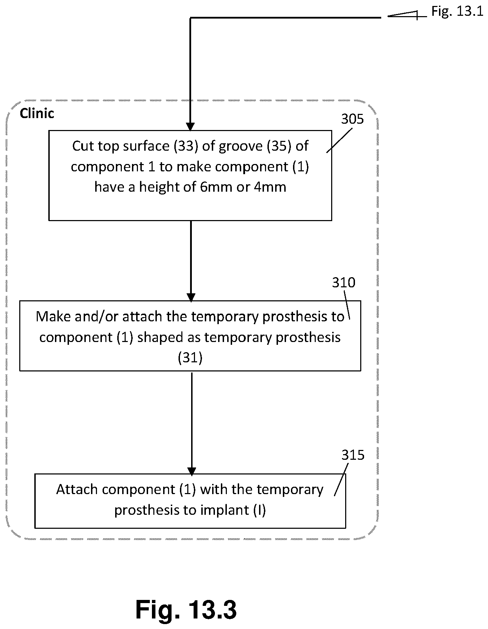

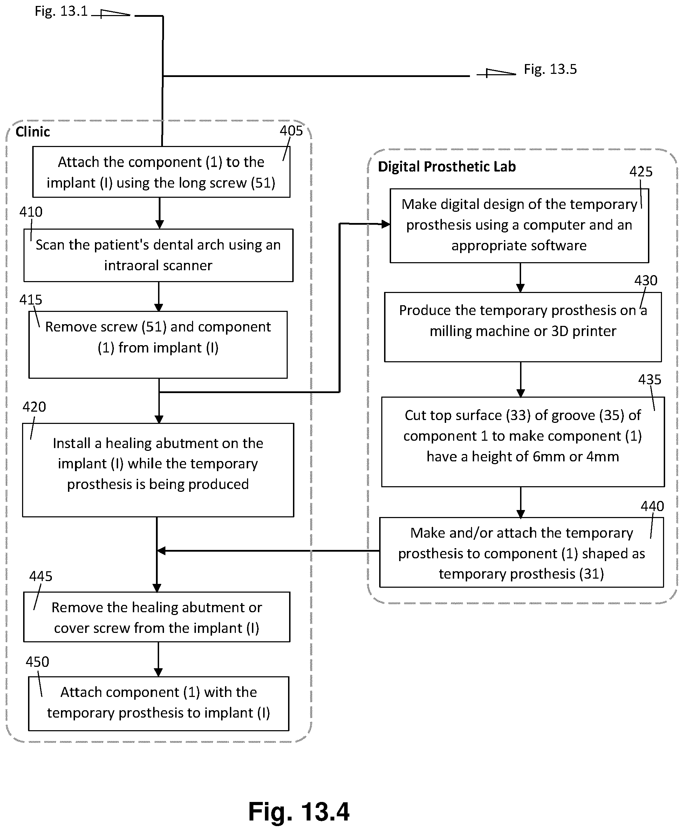

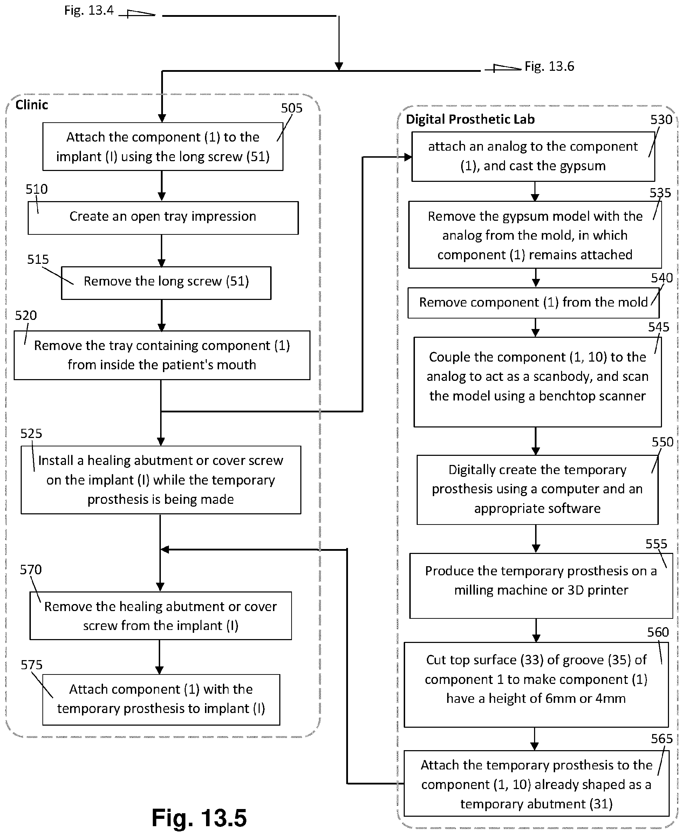

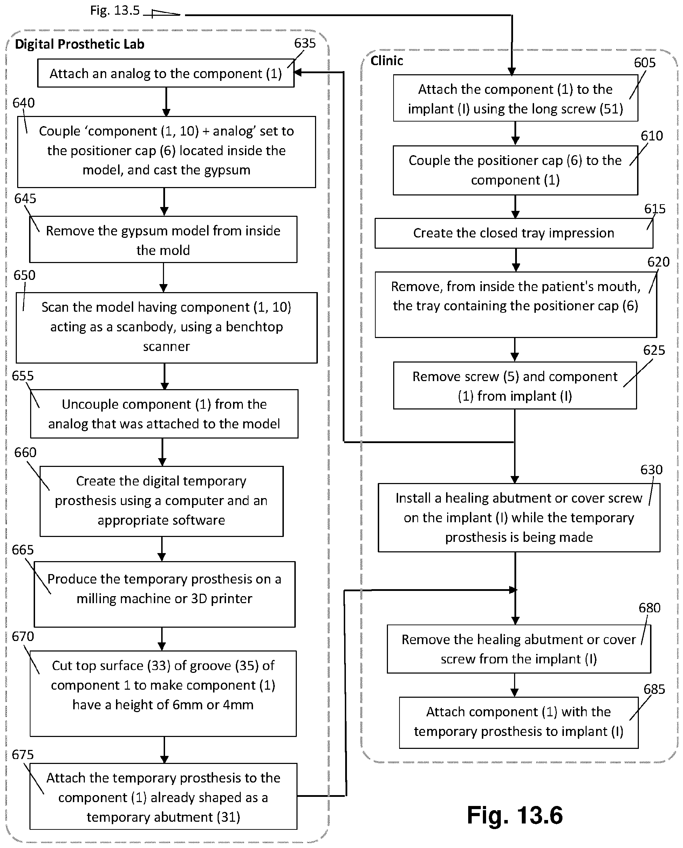

The installation of an immediate loading prosthesis using a temporary component and a temporary prosthesis during the osseointegration period, can be done by six distinct methods, the steps of which will be presented below.
**1.** The immediate loading prosthesis installation method using the conventional workflow with open tray (as illustrated in Fig. 13.1) involves the steps as follows:
   (100) Install the implant **I** in the surgical alveolus;
   (105) Attach the component **1** to the implant **I** using the long screw **51;**
   (110) Create an impression of the patient's arch using an open tray filled with a dental impression composition;
   (115) After the required waiting period, remove the long screw **51;**
   (120) Remove the tray containing the multifunctional component **1** from inside the patient's mouth;
   (125) Optional step: install a healing abutment or cover screw on the implant **I** during the production period of the temporary prosthesis;
   (130) Start of the prosthetic procedure: attach an analog to the multifunctional component **1,** and cast gypsum to prepare the model of the patient's dental arch;
   (135) After the required waiting period, remove the gypsum model containing the analog **1** from inside the impression mold, noticing that the multifunctional component **1** remains attached to the impression (gypsum model);
   (140) Remove the component **1** from the impression mold;
   (145) With the aid of an appropriate dental tool, cut the top surface **33** of the multifunctional component **1** so that the temporary abutment **31** has a height of **6** mm, or make said cut in the groove **35** to make the temporary component **31** has a height of 4 mm;
   (150) Make and attach the temporary prosthesis on the multifunctional component **1** shaped as a temporary prosthetic component **31,** being this the end of the prosthesis procedure.
   (155) Only if step (125) was performed: remove the healing abutment or cover screw from the implant **I;**
   (160) By cementing or screwing, attach the multifunctional component **1** acting as a temporary abutment on the implant **I.**
**2.** The immediate loading prosthesis installation method using the conventional workflow with a closed tray (as illustrated in Fig. 13.2) involves the steps as follows:
   (100) Install the implant **I** in the surgical alveolus;
   (205) Attach the component **1** to the implant **I** using the screw **5;**
   (210) Couple the positioner cap **6** to the component **1;**
   (215) Create the impression using a closed tray;
   (220) Remove, from inside the patient's mouth, the tray having the positioner cap **6;**
   (225) Remove the screw **5** and the component **1** from the implant **I**;
   (230) Optional step: install a healing abutment or cover screw on the implant **I** during the production period of the temporary prosthesis;
   (235) Start of the prosthetic procedure: attach an analog to the multifunctional component **1;**
   (240) Couple the 'component **1** + analog' set to the positioner cap **6** located inside the impression mold, and cast the gypsum;
   (245) Remove the gypsum model from inside the impression mold;
   (250) Uncouple the component **1** from the analog that has been attached to the model;
   (255) With the aid of an appropriate dental tool, cut the top surface **33** of the multifunctional component **1** so that the temporary abutment **31** has a height of **6** mm, or make said cut in the groove **35** to make the temporary component **31** has a height of 4 mm;
   (260) Make and/or attach the temporary prosthesis on the multifunctional component **1** already shaped as a temporary prosthetic component **31,** being this the end of the prosthetic procedure;
   (265) Only if step (230) was performed: remove the healing abutment or cover screw from the implant **I;**
   (270) By cementing or screwing, attach the multifunctional component **1** acting as a temporary abutment on the implant **I.**
**3.** The immediate loading prosthesis installation method using the quick workflow (as illustrated in Fig. 13.3) involves the steps as follows:
   (100) Install the implant **I** in the surgical alveolus;
   (305) With the aid of an appropriate dental tool, cut the top surface **33** of the multifunctional component **1** to make the temporary abutment **31** has a height of **6** mm, or make said cut in the groove **35** to make the temporary component **31** has a height of 4 mm;
   (310) Make and/or attach a temporary prosthesis on the multifunctional component **1** already shaped as a temporary abutment **31;**
   (315) By cementing or screwing, attach the multifunctional component **1** acting as a temporary abutment on the implant **I.**
**4.** The immediate loading prosthesis installation method through the digital workflow using an intraoral scanner (as illustrated in Fig. 13.4) involves the steps as follows:
   (100) Install the implant **I** in the surgical alveolus;
   (405) Attach the component **1** to the implant **I** using the screw **5;**
   (410) Scan the patient's dental arch using an intraoral scanner;
   (415) Remove the screw **5** and the component **1** from the implant **I**;
   (420) Optional step: install a healing abutment or cover screw on the implant **I** during the production period of the temporary prosthesis;
   (425) Start of the prosthetic procedure: make the digital impression of the temporary prosthesis using a computer and an appropriate software;
   (430) Produce the digitally designed temporary prosthesis on a milling machine or 3D printer;
   (435) With the aid of an appropriate dental tool, cut the top surface **33** of the multifunctional component **1** to make the temporary abutment **31** has a height of 6 mm, or make said cut in the groove **35** to make the temporary component **31** has a height of 4 mm;
   (440) Attach the temporary prosthesis to the component **1** already shaped as a temporary abutment **31,** being this the end of the prosthetic procedure;
   (445) Only if the step (420) was performed: remove the healing abutment or cover screw from the implant **I**;
   (450) By cementing or screwing, attach the multifunctional component **1** acting as a temporary abutment on the implant **I.**
**5.** The immediate loading prosthesis installation method through the digital workflow using an open tray and a benchtop scanner (as illustrated in Fig. 13.5) involves the steps as follows:
   (100) Install the implant **I** in the surgical alveolus;
   (505) Attach the component **1** to the implant **I** using the long screw **51;**
   (510) Create a physical impression using an open tray;
   (515) Remove the long screw **51;**
   (520) Remove, from inside the patient's mouth, the tray containing the component **1;**
   (525) Optional step: install a healing abutment or cover screw on the implant **I** during the production period of the temporary prosthesis;
   (530) Start of the prosthetic procedure: attach an analog to component **1,** and cast the gypsum in the mold;
   (535) Remove the gypsum model containing the analog from inside the mold in which component remains attached **1;**
   (540) Remove the component **1** from the impression;
   (545) Couple the component **1** to the analog to act as a scanbody, and scan the model using a benchtop scanner;
   (550) Create the digital temporary prosthesis using a computer and an appropriate software;
   (555) Produce the digitally designed temporary prosthesis on a milling machine or 3D printer;
   (560) With the aid of an appropriate dental tool, cut the top surface **33** of the multifunctional component **1** to make the temporary abutment **31** have a height of 6 mm, or make said cut in the groove **35** to make the temporary component **31** have a height of 4 mm;
   (565) Attach the temporary prosthesis to the component **1** already shaped as a temporary abutment **31,** being this the end of the prosthetic procedure;
   (570) Only if step (525) was performed: remove the healing abutment or cover screw from the implant **I**;
   (575) By cementing or screwing, attach the multifunctional component **1** acting as a temporary abutment on the implant **I.**
**6.** The immediate loading prosthesis installation method through the digital workflow using a closed tray benchtop scanner (as illustrated in Fig. 13.6) involves the steps as follows:
   (100) Install the implant **I** in the surgical alveolus;
   (605) Attach the component **1** to the implant **I** using the screw **5;**
   (610) Couple the positioner cap **6** to the component **1;**
   (615) Create the physical impression using a closed tray;
   (620) Remove, from inside the patient's mouth, the tray containing the positioner cap **6;**
   (625) Remove the screw **5** and component **1** from the implant **I**;
   (630) Optional step: install a healing abutment or cover screw on the implant I during the production period of the temporary prosthesis;
   (635) Start of the prosthetic procedure: attach an analog to the component **1;**
   (640) Couple the 'component **1** + analog' set to the positioner cap **6** that is inside the impression mold and cast the gypsum;
   (645) Remove the gypsum model from inside the impression mold;
   (650) Scan the model having the component **1** acting as scanbody, using a benchtop scanner;
   (655) Uncouple the component **1** from the analog that was attached to the model;
   (660) create the digital temporary prosthesis using a computer and an appropriate software;
   (665) Produce the digitally designed temporary prosthesis on a milling machine or 3D printer;
   (670) With the aid of an appropriate dental tool, cut the top surface **33** of the multifunctional component **1** to make the temporary abutment **31** have a height of **6** mm, or make said cut in the groove **35** to make the temporary component **31** have a height of 4 mm;
   (675) Attach the temporary prosthesis to the component **1** already shaped as a temporary abutment **31,** being this the end of the prosthetic procedure;
   (680) Only if step (630) was performed: remove the healing abutment or cover screw from the implant **I**;
   (685) By cementing or screwing, attach the multifunctional component **1** acting as a temporary abutment on the implant **I.**

### II. Two-step dental prosthesis installation

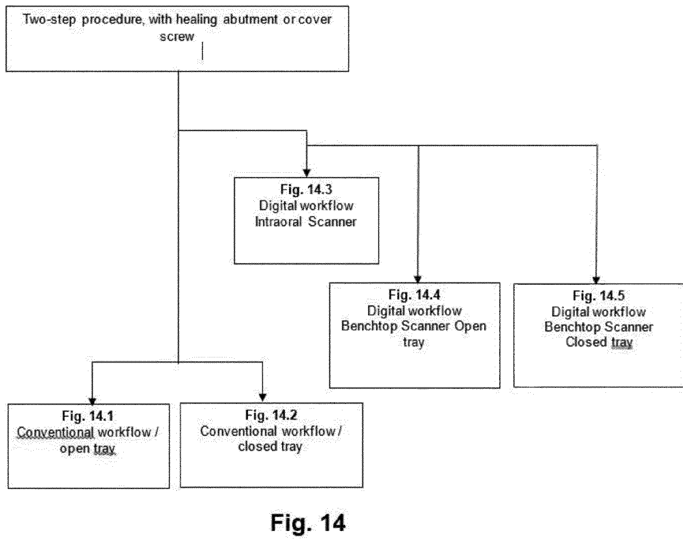

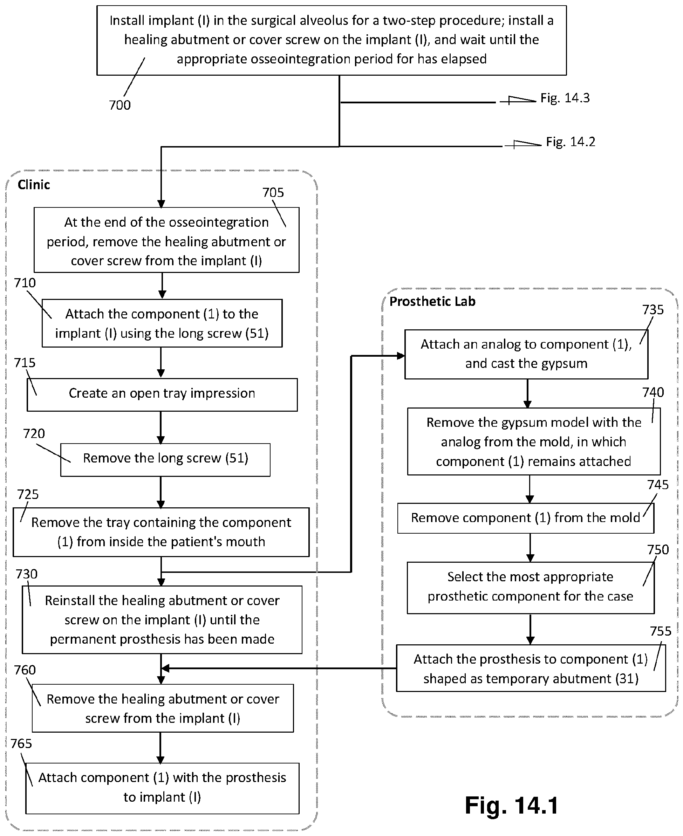

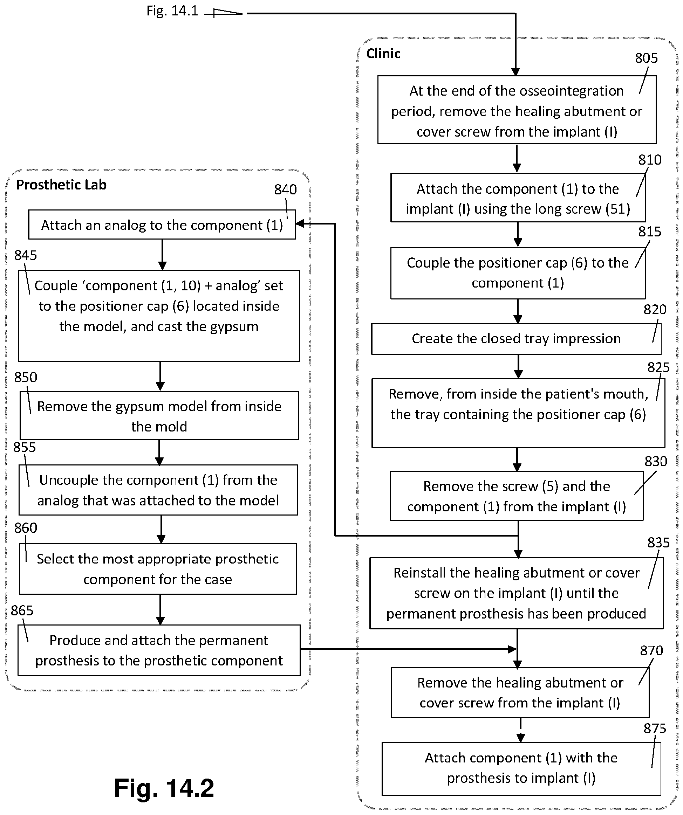

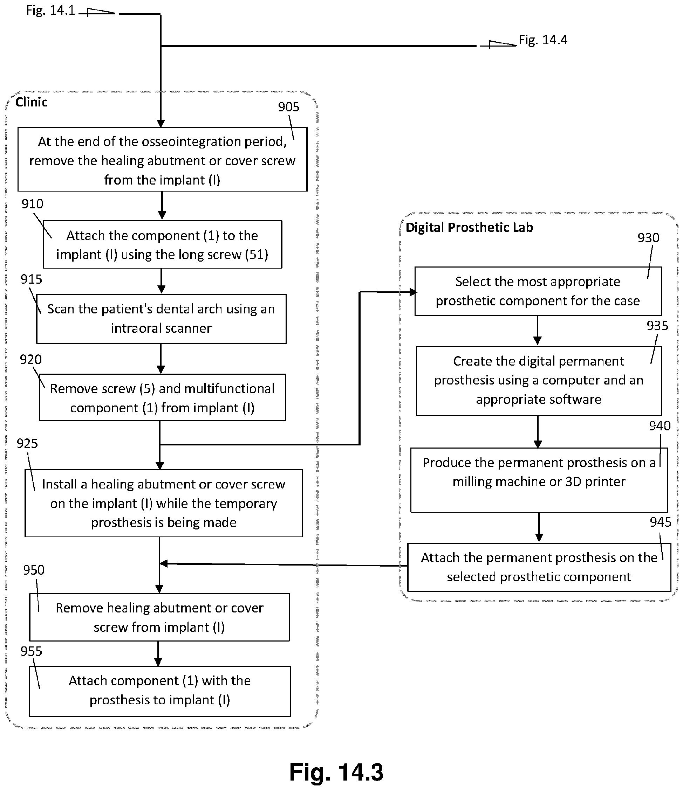

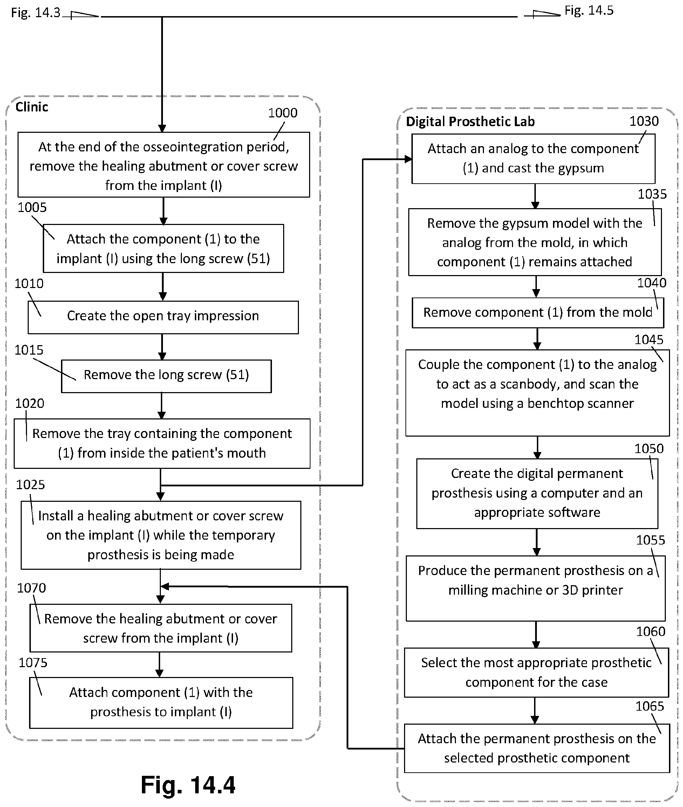

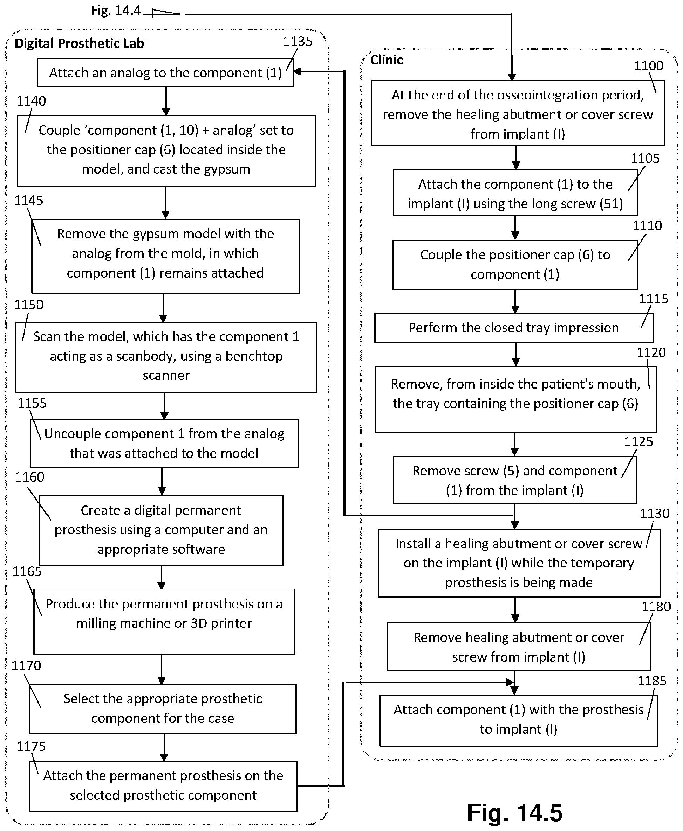

The two-step installation needs that, in the first step, the newly installed implant is closed with a cover screw or healing abutment and only in the second step, after the osseointegration period, the permanent prosthesis shall be made and prepared. This is a process that can be done in five different manners, the steps of which will be presented below.
**1.** The two-step prosthesis installation method through the conventional workflow using an open tray (as illustrated in Fig. 14.1) involves the steps as follows:
   (700) Install the implant **I** in the surgical alveolus for a two-step procedure, and afterwards install a healing abutment or cover screw on the implant **I** and wait until the appropriate osseointegration period has elapsed;
   (705) At the end of the osseointegration period, remove the healing abutment or cover screw from the implant **I**;
   (710) Attach the component **1** to implant **I** using the long screw **51;**
   (715) Create the impression using an open tray;
   (720) Remove the long screw **51;**
   (725) Remove the tray containing component **1** from inside the patient's mouth;
   (730) Optional step: reinstall a healing abutment or cover screw on the implant **I** until the permanent prosthesis has been produced;
   (735) Start of the prosthetic procedure: attach an analog to component **1** and cast the gypsum;
   (740) Remove the gypsum model containing the analog from inside the model, in which the component remains attached **1;**
   (745) Remove the component **1** from the impression mold;
   (750) Select the most appropriate prosthetic component for the case;
   (755) Produce and attach the permanent prosthesis on the chosen prosthetic component, being this the end of the prosthetic procedure;
   (760) Only if the step (730) was performed: remove the healing abutment or cover screw from the implant **I**;
   (765) By cementing or screwing, attach the component containing the permanent prosthesis to the implant **I.**
**2.** The two-step prosthesis installation method through the conventional workflow with a closed tray (as illustrated in Fig. 14.1) involves the steps as follows:
   (700) Install the implant **I** in the surgical alveolus for the two-step procedure, and afterwards install a healing abutment or cover screw on the implant I and wait until the appropriate osseointegration period has elapsed;
   (805) At the end of the osseointegration period, remove the healing abutment or cover screw from implant **I**;
   (810) Attach the component **1** to the implant **I** using the screw **5;**
   (815) Couple the positioner cap **6** to the component **1;**
   (820) Create the impression using a closed tray;
   (825) Remove, from inside the patient's mouth, the tray containing the positioner cap **6;**
   (830) Remove the screw **5** and component **1** from the implant **I**;
   (835) Optional step: reinstall the healing abutment or cover screw on the implant **I** until the permanent prosthesis is produced;
   (840) Start of the prosthetic procedure: attach an analog to the component **1;**
   (845) Couple the 'component **1** + analog' set to the positioner cap **6** that is inside the impression mold and cast the gypsum;
   (850) Remove the gypsum model from inside the impression mold;
   (855) Uncouple the component **1** from the analog that was attached to the model;
   (860) Select the most appropriate prosthetic component for the case;
   (865) produce and attach the permanent prosthesis to the prosthetic component - end of the prosthetic procedure;
   (870) Only if step (835) was performed: remove the healing abutment or cover screw from the implant **I**;
   (875) By cementing or screwing, attach the component containing the permanent prosthesis to the implant **I.**
**3.** The two-step prosthesis installation method through the digital workflow using an intraoral scanner (as illustrated in Fig. 14.3) involves the steps as follows:
   (700) Install the implant **I** in the surgical alveolus for a two-step procedure, and afterwards install a healing abutment or cover screw on the implant **I** and wait until the appropriate osseointegration period has elapsed;
   (905) At the end of the osseointegration period, remove the healing abutment or cover screw from the implant **I**;
   (910) Attach the multifunctional component **1** to the implant **I** using the screw **5;**
   (915) Scan the patient's dental arch using an intraoral scanner;
   (920) Remove the screw **5** and the multifunctional component **1** from the implant **I**;
   (925) Optional step: reinstall the healing abutment or cover screw on the implant **I** until the permanent prosthesis is produced;
   (930) Start of the prosthetic procedure: select the most appropriate prosthetic component for the case;
   (935) Create the digital permanent prosthesis using a computer and an appropriate software;
   (940) Produce the permanent prosthesis on a milling machine or 3D printer;
   (945) Attach the permanent prosthesis on the selected prosthetic component, being this the end of the prosthetic procedure;
   (950) Only if step (925) was performed: remove the healing abutment or cover screw from the implant **I**;
   (955) By cementing or screwing, attach the component containing the permanent prosthesis to the implant **I.**
**4.** The two-step prosthesis installation method through the digital workflow using a benchtop scanner with an open tray (as illustrated in Fig. 14.4) involves the steps as follows:
   (700) Install the implant **I** in the surgical socket for a two-step procedure; afterwards install a healing abutment or cover screw on the implant **I** and wait until the appropriate osseointegration period has elapsed;
   (1000) At the end of the osseointegration period, remove the healing abutment or cover screw from the implant **I**;
   (1005) Attach the component **1** to the implant **I** using the long screw **51;**
   (1010) Create the impression using an open tray;
   (1015) Remove the long screw **51;**
   (1020) Remove, from inside the patient's mouth, the tray containing the component **1;**
   (1025) Optional step: reinstall a healing abutment or cover screw on the implant **I** until the permanent prosthesis is produced;
   (1030) Start of the prosthetic procedure: attach an analog to component **1,** and cast the gypsum;
   (1035) Remove the gypsum containing the analog from inside the impression mold, in which component remains attached **1;**
   (1040) Remove the component **1** from the impression mold;
   (1045) Couple the component **1** to the analog to act as a scanbody, and scan the model using a benchtop scanner;
   (1050) Create the digital permanent prosthesis using a computer and an appropriate software;
   (1055) Produce the permanent prosthesis on a milling machine or 3D printer;
   (1060) Select the most appropriate prosthetic component for the case;
   (1065) Attach the permanent prosthesis on the selected prosthetic component, being this the end of the prosthetic procedure;
   (1070) Only if the step (1025) was performed: remove the healing abutment or cover screw from implant **I**;
   (1075) By cementing or screwing, attach the component containing the permanent prosthesis to the implant **I.**
**5.** The two steps prosthesis installation method through the digital workflow using a benchtop scanner with a closed tray (as illustrated in Fig. 14.5) involves the steps as follows:
   (700) Install the implant **I** in the surgical alveolus for a two-step procedure; afterwards install a healing abutment or cover screw on the implant **I** and wait until the appropriate osseointegration period for has elapsed;
   (1100) At the end of the osseointegration period, remove the healing abutment or cover screw from implant **I**;
   (1105) Attach component **1** to the implant **I** using the screw **5;**
   (1110) Couple the positioner cap **6** to component **1;**
   (1115) Perform the impression using a closed tray;
   (1120) Remove, from inside the patient's mouth, the tray containing the positioner cap **6;**
   (1125) Remove the screw **5** and component **1** from the implant **I**;
   (1130) optional step: install a healing abutment or cover screw on the implant **I** until the permanent prosthesis has been produced;
   (1135) Start of the prosthetic procedure: attach an analog to the component **1;**
   (1140) Couple the 'component **1** + analog' set to the positioner cap **6** that is inside the impression mold, and cast the gypsum;
   (1145) Remove the gypsum model containing the analog and the component 1 from inside the mold;
   (1150) Scan the model, which has the component **1** acting as a scanbody, using a benchtop scanner;
   (1155) Uncouple component **1** from the analog that was attached to the model;
   (1160) Create a digital permanent prosthesis using a computer and an appropriate software;
   (1165) Produce the permanent prosthesis on a milling machine or 3D printer;
   (1170) Select the appropriate prosthetic component for the case;
   (1175) Attach the permanent prosthesis on the selected prosthetic component, being this the end of the prosthetic procedure;
   (1180) Only if step (1130) was performed: remove the healing abutment or cover screw from implant **I**;
   (1185) By cementing or screwing, attach the component containing the permanent prosthesis to the implant **I.**

The multifunctional prosthetic component disclosed herein may also present constructive variations in its portion **3,** and may present more appropriate geometries for permanent prostheses, without deviating from the protection scope required herein. For example, possible embodiments may present helical channels along part of region **3,** and/or a geometry capable of being indexed with hexagon **21** with respect to the component longitudinal axis, with anti-rotational locking function for the prosthesis/crown. It should also be clarified that the multifunctional component can be made of any type of appropriate material (such as, for example, titanium, zirconia or PEEK) or combinations of materials, and be used to install temporary or permanent prostheses.

Having described a preferred embodiment example, it should be understood that the scope of this invention covers other possible variations, and is only limited by the content of the appended claims, including possible equivalents thereof.

## Claims

1. Multifunctional prosthetic component for conventional or digital workflow for implant supported dental prosthesis installation, comprising a component (1) removably attached to an implant (I) or analog, which consists of
- a lower region (2) comprising a lower interface geometry (22) which cooperates with an implant interface (I), wherein said lower interface (22) has, in the bottom portion, an anti-rotational element (21) and, in the upper portion (23), the lower surface has a transmucosal region (23); and
- an intermediate region (3) comprising an abutment (31) supported by a tapered seating region (32) which is attached to the upper end of the transmucosal region (23), wherein said abutment (31) has a top surface (33),
the component (1) being **characterized in that** it comprises an upper region (4) defined by at least one upper interface structure (41) comprising a hole (O) for coupling a screw (5, 51) that cooperates with the implant (I),
wherein the upper interface (41) comprises at least one vertical facet (46);
wherein the joining portion between the intermediate region (3) and the upper region (4) configures a cutting location to separate the upper region (4) from the abutment (31).

2. Multifunctional prosthetic component according to claim 1, **characterized in that** it is used as a conventional closed tray transfer, a conventional open tray transfer, a scanbody and a temporary abutment.

3. Multifunctional prosthetic component according to claim 1, **characterized in that** said abutment (31) comprises: a body of substantially tapered shaped supported by the tapered seating region (32); at least one top surface (33); at least one perimeter groove (35) and at least one substantially vertical facet (34).

4. Multifunctional prosthetic component according to claims 1 and 3, **characterized in that** the upper interface structure (41) comprises at least one neck (42) linked to the top surface (33), wherein said neck (42) supports at least one substantially trapezoidal body (43) which supports a substantially cylindrical body with a flat top surface (45).

5. Multifunctional prosthetic component according to claim 1, **characterized in that** the upper interface (41) comprises at least one groove (44) on its median horizontal axis.

6. Multifunctional prosthetic component according to claim 1, **characterized in that** at least one vertical facet (46) of the upper interface (41) is vertically aligned with the facet (34) of the abutment (31).

7. Multifunctional prosthetic component according to claims 1 and 6, **characterized in that** at least one vertical facet (46) of the upper interface (41) is rotationally indexed with the anti-rotational element (21) along the longitudinal axis of the component (1).

8. Multifunctional prosthetic component according to claim 1, **characterized in that** at least one perimeter groove (35) of the abutment (31) configures a cut-off marking to adjust the height of the abutment (31).

9. Multifunctional prosthetic component according to claim 1, **characterized in that** the lower interface geometry (22) comprises one of the following interfaces: morse cone, external hexagon, or internal hexagon.

10. Multifunctional prosthetic component according to claim 1, **characterized in that** the intermediate region (3) and the upper region (4) of the multifunctional component (1) comprise a surface treated with a material that enables scanning with intraoral or benchtop scanning equipment.

11. Multifunctional prosthetic component according to claim 1, **characterized in that** the intermediate region (3) and the upper region (4) of the multifunctional component (1) have a microscopically modified surface to enable geometric recognition when using intraoral or benchtop scanning equipment.

12. Multifunctional prosthetic component according to claim 1, **characterized in that** the facets (34) of the abutment (31) are vertical from the top (33) to its medial portion, wherein in the lower portion, from the medial portion of the abutment (31), such facets (34) begin to be softly concave (341) until they reach the tapered seating region (32).

13. Multifunctional prosthetic component according to claims 1 and 7, **characterized in that** at least one facet (34) of the abutment (31) is indexed to at least one face of the anti-rotational element (21) of the lower region (2).

14. Multifunctional prosthetic component according to any one of claims 1 to 13, **characterized in that** the upper portion (310) of the abutment (31) has a smaller cross-section than the cross-section of the region located below the perimeter groove (35).

15. Multifunctional prosthetic component according to claims 1 and 5, **characterized in that** it also comprises a positioner cap (6) comprising, on its inner wall, of at least one perimeter shoulder (61) that cooperates with the groove (44) of the upper interface (41) of the multifunctional component (1), when using a closed tray impression technique.

16. Multifunctional prosthetic component according to claim 15, **characterized in that** the perimeter shoulder (61) of the positioner cap (6) cooperates with the groove (44) of the upper interface (41) by one of the following means: interference, pressure, or male-female coupling.

17. Multifunctional prosthetic component according to claim 1, **characterized in that** it comprises a long screw (51) for attaching the multifunctional component (1) to the implant (I) when using an open tray impression technique.

18. Multifunctional prosthetic component for conventional or digital flow of dental implant prosthesis installation, comprising a component (10) removably attached to an implant (I) or analog, comprising:
- a lower region (2) comprising a lower interface geometry (22) cooperating with the implant interface (I), wherein the bottom (21) of said lower interface (22) is linked to an anti-rotational element, and the top (23) of said lower interface (22) is linked to a transmucosal region; and
- an intermediate region (3) comprising an s abutment (31) supported by a tapered seating region (32) which is attached to the upper end of the transmucosal region (23), wherein said abutment (31) has a top surface (33) and comprises at least one substantially vertical facet (34);
- a screw (5, 51),
the component (10) is **characterized in that** it comprises:
- an upper region (4) defined by at least one upper interface (41) structure comprising at least one groove (44), and a hole (O) for coupling a screw (5, 51) that cooperates with the implant (I), since the upper interface (41) comprises at least one vertical facet (46), and
- a positioner cap (7) attached to the Upper surface (45) of the interface (41) by means of breakable structures (71), wherein said positioner cap (7) has on its inner wall at least one perimeter shoulder that cooperates with the groove (44) of the upper interface (41) of the multifunctional component (1) when the multifunctional component (10) is pressed against the positioner cap (7) and the breakable structures (71) break, allowing the component (1, 10) to move until the positioner cap (7) is properly coupled to the upper interface (41);
wherein the union portion between the intermediate region (3) and the upper region (4) configures a cutting location to separate the upper region (4) from the temporary abutment (31).

19. Multifunctional prosthetic component according to claim 18, **characterized in that** said abutment (31) comprises: a substantially truncated conical shaped body supported by the conical abutment (32); at least one top surface (33); at least one perimeter recess (35) and at least one substantially vertical facet (34).

20. Multifunctional prosthetic component according to claims 18 and 19, **characterized in that** the upper interface structure (41) comprises at least one neck (42) linked to the top surface (33), wherein said neck (42) supports at least one substantially trapezoidal body (43) which supports a substantially cylindrical body with a flat top surface (45).

21. Multifunctional prosthetic component according to claim 18, **characterized in that** that the upper interface (41) comprises at least one groove (44) on its median horizontal axis.

22. Multifunctional prosthetic component according to claim 18, **characterized in that** at least one vertical facet (46) of the upper interface (41) is vertically aligned with the facet (34) of the abutment (31).

23. Multifunctional prosthetic component according to claims 18 and 22, **characterized in that** at least one vertical facet (46) of the upper interface (41) is rotationally indexed with the anti-rotational element (21) along the longitudinal axis of the component (10).

24. Multifunctional prosthetic component according to claim 18, **characterized in that** at least one perimeter groove (35) of the abutment (31) configures a cut-off marking to adjust the height of the abutment (31).

25. Multifunctional prosthetic component according to claim 18, **characterized in that** the lower interface geometry (22) comprises one of the following interfaces: morse cone, external hexagon, or internal hexagon.

26. Multifunctional prosthetic component according to claim 18, **characterized in that** the intermediate region (3) and the upper region (4) of the multifunctional component (10) comprise a surface treated with a material that enables scanning with intraoral or benchtop scanning equipment.

27. Multifunctional prosthetic component according to claim 18, **characterized in that** the intermediate region (3) and the upper region (4) of the multifunctional component (10) have a microscopically modified surface to enable geometric recognition when using intraoral or benchtop scanning equipment.

28. Multifunctional prosthetic component according to claim 18, **characterized in that** the facets (34) of the abutment (31) are vertical from the top (33) to its medial portion, wherein the lower portion, from the medial portion of the abutment (31), such facets (34) begin to be softly concave (341) until they reach the tapered seating region (32).

29. Multifunctional prosthetic component according to claims 18 and 28, **characterized in that** at least one facet (34) of the abutment (31) is indexed to at least one face of the anti-rotational element (21) of the lower region (2).

30. Multifunctional prosthetic component according to any one of claims 18 to 29, **characterized in that** the upper portion (310) of the abutment (31) has a smaller cross section than the cross section of the region located below the perimeter groove (35).

31. Method of immediate loading prosthesis installation through the conventional open tray workflow using the multifunctional prosthetic component (1, 10) as defined in claims 1 to 30, **characterized in that** it comprises the following steps:
- (100) Install the implant (I) in the surgical alveolus;
- (105) Attach the component (1) to the implant (I) using the long screw (51);
- (110) Create an impression of the patient's arch using an open tray filled with a dental impression composition;
- (115) After the appropriate waiting period, remove the long screw (51);
- (120) Remove the tray containing the multifunctional component (1, 10) from inside the patient's mouth;
- (125) Optional step: install a healing abutment or cover screw on the implant (I) while the temporary prosthesis is being produced;
- (130) Start of the prosthetic procedure: attach an analog to the multifunctional component (1, 10) and cast gypsum to make the model of the patient's dental arch;
- (135) After the waiting period, remove the gypsum model containing the analog from inside the impression mold, the multifunctional component (1, 10) remaining attached to the model;
- (140) Remove the component (1, 10) from the impression mold;
- (145) With the aid of an appropriate dental tool, cut the top surface (33) of the multifunctional component (1, 10) to make the abutment (31) have a height of 6 mm, or make said cut in the groove (35) to make the abutment (31) have a height of 4 mm;
- (150) Make and attach the temporary prosthesis to the multifunctional component (1, 10) already shaped as a temporary abutment (31), being this the end of the prosthetic procedure;
- (155) Only if the step (125) was performed: remove the healing abutment or cover screw from the implant (I);
- (160) By cementing or screwing, attach the multifunctional component (1, 10), acting as a temporary abutment, to the implant (I).

32. Method of immediate loading prosthesis installation through the closed tray conventional workflow using the multifunctional prosthetic component (1, 10) as defined in claims 1 to 30, **characterized in that** it comprises the following steps:
- (100) Install the implant (I) in the surgical alveolus;
- (205) Attach the component (1, 10) to the implant (I) using the screw (5);
- (210) Couple the positioner cap (6) to the component (1, 10);
- (215) Create impression using a closed tray;
- (220) Remove, from inside the patient's mouth, the tray containing the positioner cap (6);
- (225) Remove the screw (5) and component (1, 10) from the implant (I);
- (230) Optional step: install a healing abutment or cover screw on the implant (I) while the temporary prosthesis is being produced;
- (235) Start of the prosthetic procedure: attach an analog to the multifunctional component (1, 10);
- (240) Couple the 'component (1, 10) + analog' set to the positioner cap (6) located inside the model, and cast the gypsum;
- (245) Remove the gypsum model from inside the mold;
- (250) Uncouple the component (1, 10) from the analog that was attached to the model;
- (255) With the aid of an appropriate dental tool, cut the top surface (33) of the multifunctional component (1, 10) to make the abutment (31) have a height of 6 mm, or make said cut in the groove (35) until the abutment (31) have a height of 4 mm;
- (260) Make and/or attach the temporary prosthesis to the multifunctional component (1, 10) already shaped as a temporary abutment (31), being this the end of the prosthesis step;
- (265) Only if step (230) was performed: remove the healing abutment or cover screw from the implant (I);
- (270) By cementing or screwing, attach the multifunctional component (1, 10), acting as a temporary abutment, to the implant (I).

33. Method of immediate loading prosthesis installation through a fast workflow using the multifunctional prosthetic component as defined in claims 1 to 30, **characterized in that** it comprises the following steps:
- (100) Install the implant (I) in the surgical alveolus;
- (305) With the aid of an appropriate dental tool, cut the top surface (33) of the multifunctional component (1, 10) to make the resulting temporary abutment (31) have a height of 6 mm, or make said cut in the recess (35) to make the abutment (31) have a height of 4 mm;
- (310) Make and/or attach the temporary prosthesis to an already formed multifunctional component (1, 10) already shaped as a temporary abutment (31);
- (315) By cementing or screwing, attach the multifunctional component (1, 10), acting as a temporary abutment, to the implant (I).

34. Method of immediate loading prosthesis installation through a digital workflow using an intraoral scanner and the multifunctional prosthetic component (1, 10) as defined in claims 1 to 30, **characterized in that** it comprises the following steps:
- (100) Install the implant (I) in the surgical alveolus;
- (405) Attach the component (1, 10) to the implant (I) using the screw (5);
- (410) Scan the patient's dental arch using an intraoral scanner;
- (415) Remove the screw (5) and the component (1, 10) from the implant (I);
- (420) Optional step: install a healing abutment or cover screw on the implant (I) while the temporary prosthesis is being produced;
- (425) Start of the prosthetic procedure: make the digital design of the temporary prosthesis using a computer and an appropriate software;
- (430) Produce the temporary prosthesis on a milling machine or 3D printer;
- (435) With the aid of an appropriate dental tool, cut the top surface (33) of the multifunctional component (1, 10) to make the resulting temporary abutment (31) have a height of 6 mm, or make said cut in the roove (35) to make the abutment (31) have a height of 4 mm;
- (440) Attach the temporary prosthesis to the component (1, 10) already shaped as a temporary abutment (31), being this the end of the prosthetic procedure;
- (445) Only if step (420) was perfomed: remove the healing abutment or cover screw from the implant (I);
- (450) By cementing or screwing, attach the multifunctional component (1, 10), acting as a temporary abutment, to the implant (I).

35. Method of immediate loading prosthesis installation through the digital workflow using open tray and a benchtop scanner, using the multifunctional prosthetic component (1, 10) as defined in claims 1 to 30, **characterized in that** it comprises the following steps:
- Install the implant (I) in the surgical alveolus;
- (505) Attach the component (1, 10) to the implant (I) using the long screw (51);
- (510) Create an impression using an open tray;
- (515) Remove the long screw (51);
- (520) Remove the tray containing the component (1, 10) from inside the patient's mouth;
- (525) Optional step: install a healing abutment or cover screw on the implant (I) while the temporary prosthesis is being made;
- (530) Start of the prosthetic procedure: attach an analog to the component (1), and cast the gypsum;
- (535) Remove the gypsum model containing the analog from inside the mold, in which component (1, 10) remains attached;
- (540) Remove the component (1, 10) from the impression;
- (545) Couple the component (1, 10) to the analog to act as a scanbody, and scan the model using a benchtop scanner;
- (550) Digitally create the digital the temporary prosthesis using a computer and an appropriate software;
- (555) Produce the temporary prosthesis on a milling machine or 3D printer;
- (560) With the aid of an appropriate dental tool, cut the the top surface (33) of the multifunctional component (1, 10) to make the resulting temporary abutment (31) have a height of 6 mm, or make said cut in the groove (35) until the abutment (31) have a height of 4 mm;
- (565) Attach the temporary prosthesis to the component (1, 10) already shaped as a temporary abutment (31), being this the end of the prosthetic prosthesis;
- (570) Only if step (525) was performed: remove the healing abutment or cover screw from the implant (I);
- (575) By cementing or screwing, attach the multifunctional component (1, 10), acting as a temporary abutment, to the implant (I).

36. Method of immediate loading prosthesis installation through the digital workflow using a closed tray technique and a benchtop scanner, and using the multifunctional prosthetic component (1, 10) as defined in claims 1 to 30, **characterized in that** it comprises the following steps:
- (100) Install the implant (I) in the surgical alveolus;
- (605) Attach the component (1, 10) to the implant (I) using the screw (5);
- (610) Couple the positioner cap (6) to the component (1, 10);
- (615) Create the impression using a closed tray;
- (620) Remove, from inside the patient's mouth, the tray containing the positioner cap (6);
- (625) Remove the screw (5) and the component (1, 10) from the implant (I);
- (630) Optional step: install a healing abutment or cover screw on the implant (I) while the temporary prosthesis is being made;
- (635) Start of the prosthetic procedure: attach an analog to the component (1, 10);
- (640) Couple the 'component (1, 10) + analog' set to the positioner cap (6) that is inside the model, and cast the gypsum;
- (645) Remove the gypsum model from inside the mold;
- (650) Scan the model having component (1, 10) acting as a scanbody, using a benchtop scanner;
- (655) Uncouple the component (1, 10) from the analog that was attached to the model;
- (660) Create the digital temporary prosthesis using a computer and an appropriate software;
- (665) Produce the temporary prosthesis on a milling machine or 3D printer;
- (670) With the aid of an appropriate dental tool, cut the top surface (33) of the multifunctional component (1, 10) to make the temporary abutment (31) have a height of 6 mm, or make said cut in the groove (35) to make the abutment (31) have a height of 4 mm;
- (675) Attach the temporary prosthesis to the component (1, 10) already shaped as a temporary abutment (31), being this the end of the prosthetic phase;
- (680) Only if step (630) was performed: remove the healing abutment or cover screw from the implant (I);
- (685) By cementing or screwing, attach the multifunctional component (1, 10), acting as a temporary abutment, to the implant (I).

37. Method of two-step dental prosthesis installation through the open tray conventional workflow using the multifunctional prosthetic component (1, 10) as defined in claims 1 to 30, **characterized in that** it comprises the following steps:
- (700) Install the implant (I) in the surgical alveolus for a two-step procedure; afterwards install a healing abutment or cover screw on the implant (I), and wait until the appropriate osseointegration period for has elapsed;
- (705) At the end of the osseointegration period, remove the healing abutment or cover screw from the implant (I);
- (710) Attach the component (1, 10) to the implant (I) using the long screw (51);
- (715) Create an open tray impression;
- (720) Remove the long screw (51);
- (725) Remove the tray containing the component (1, 10) from inside the patient's mouth;
- (730) Optional step: reinstall the healing abutment or cover screw on the implant (I) until the permanent prosthesis has been made;
- (735) Start of the prosthesis procedure: attach an analog to component (1), and cast the gypsum;
- (740) Remove the gypsum model containing the analog from inside the mold, in which component (1, 10) remains attached;
- (745) Remove the component (1, 10) from the impression mold;
- (750) Select the most appropriate prosthetic component for the case;
- (755) Produce and attach the permanent prosthesis on the chosen prosthetic component, being this the end of the prosthetic procedure;
- (760) Only if step (730) was performed: remove the healing abutment or cover screw from the implant (I);
- (765) By cementing or screwing, attach the component containing the permanent prosthesis to the implant (I).

38. Method of two-step dental prosthesis installation through the conventional closed tray workflow, using the multifunctional prosthetic component (1, 10) as defined in claims 1 to 30, **characterized in that** it comprises the following steps:
- (700) Install the implant (I) in the surgical alveolus for the two-step procedure; install a healing abutment or cover screw on the implant (I), and wait until the appropriate osseointegration period has elapsed;
- (805) At the end of the osseointegration period, remove the healing abutment or cover screw from the implant (I);
- (810) Attach the component (1, 10) to the implant (I) using the screw (5);
- (815) Couple the positioner cap (6) to the component (1, 10);
- (820) Create the impression using a closed tray;
- (825) Remove, from inside the patient's mouth, the tray containing the positioner cap (6);
- (830) Remove the screw (5) and the component (1, 10) from the implant (I);
- (835) Optional step: reinstall the healing abutment or cover screw on the implant (I) until the permanent prosthesis has been produced;
- (840) Start of the prosthetic procedure: attach an analog to the component (1);
- (845) Couple the 'component (1, 10) + analog' set to the positioner cap (6) that is inside the impression mold, and cast the gypsum;
- (850) Remove the gypsum model from inside the mold;
- (855) Uncouple the component (1, 10) from the analog that was attached to the model;
- (860) Select the most appropriate prosthetic component for the case;
- (865) Produce and attach the permanent prosthesis to the prosthetic component, being this the end of the prosthetic phase;
- (870) Only if step (835) was performed: remove the healing abutment or cover screw from the implant (I);
- (875) By cementing or screwing, attach the component containing the permanent prosthesis to the implant (I).

39. Method of two-step dental prosthesis installation through the digital open tray workflow using a benchtop scanner and the multifunctional prosthetic component (1, 10) as defined in claims 1 to 30, **characterized in that** it comprises the following steps:
- (700) Install the implant (I) in the surgical alveolus for a two-step procedure; install a healing abutment or cover screw on the implant (I), and wait until the appropriate osseointegration period for has elapsed;
- (1000) At the end of the osseointegration period, remove the healing abutment or cover screw from the implant (I);
- (1005) Attach the component (1, 10) to the implant (I) using the long screw (51);
- (1010) Create the open tray impression;
- (1015) Remove the long screw (51);
- (1020) Remove the tray containing the component (1, 10) from inside the patient's mouth;
- (1025) Optional step: reinstall the healing abutment or cover screw on the implant (I) until the permanent prosthesis has been produced;
- (1030) Start of the prosthetic procedure: attach an analog to the component (1, 10) and cast the gypsum;
- (1035) Remove the gypsum model containing the analog from inside the mold, in which component (1, 10) remains attached;
- (1040) Remove the component (1, 10) from the impression mold;
- (1045) Couple the component (1, 10) to the analog to act as a scanbody, and scan the model using a benchtop scanner;
- (1050) Create the digital permanent prosthesis using a computer and an appropriate software;
- (1055) Produce the permanent prosthesis on a milling machine or 3D printer;
- (1060) Select the most appropriate abutment for the case;
- (1065) Attach the permanent prosthesis to the selected abutment, being this the end of the prosthetic phase;
- (1070) Only if step (1025) was performed: remove the healing abutment or cover screw from the implant (I);
- (1075) By cementing or screwing, attach the component containing the permanent prosthesis to the implant (I).

40. Method of two-step dental prosthesis installation through the digital closed tray workflow using a benchtop scanner and the multifunctional prosthetic component (1, 10) as defined in claims 1 to 30, **characterized in that** it comprises the following steps:
- (700) Install the implant (I) in the surgical alveolus for a two-step procedure; install a healing abutment or cover screw on the implant (I), and wait until the appropriate osseointegration period for has elapsed;
- (1100) At the end of the osseointegration period, remove the healing abutment or cover screw from the implant (I);
- (1105) Attach the component (1, 10) to the implant (I) using the screw (5);
- (1110) Couple the positioner cap (6) to the component (1, 10);
- (1115) Create the closed tray impression;
- (1120) Remove, from inside the patient's mouth, the tray containing the attached positioner cap (6);
- (1125) Remove the screw (5) and the component (1, 10) from the implant (I);
- (1130) Optional step: install a healing abutment or cover screw on the implant (I) until the permanent prosthesis has been produced;
- (1135) Start of the prosthetic procedure: attach an analog to the component (1, 10);
- (1140) Couple the 'component (1, 10) + analog' set to the positioner cap (6) that is inside the mold, and cast the gypsum;
- (1145) Remove the gypsum model containing the analog from inside the impression mold, in which the component (1, 10) remains coupled;
- (1150) Scan the model which has the component (1, 10) acting as a scanbody, using a benchtop scanner;
- (1155) Uncouple the component (1, 10) from the analog that was attached to the model;
- (1160) Create a digital permanent prosthesis using a computer and an appropriate software;
- (1165) Produce the permanent prosthesis on a milling machine or 3D printer;
- (1170) Select the appropriate prosthetic component for the case;
- (1175) Attach the permanent prosthesis on the selected prosthetic component, being that the end of the prosthetic procedure;
- (1180) Only if step (1130) was performed: remove the healing prosthetic component or cover screw from the implant (I);
- (1185) By cementing or screwing, attach the component containing the permanent prosthesis to the implant (I).

## Amended claims

### Amended claims under Art. 19.1 PCT

1. Multifunctional prosthetic component for conventional or digital workflow for implant supported dental prosthesis installation, comprising a component (1) removably attached to an implant (I) or analog, which consists of
- a lower region (2) comprising a lower interface geometry (22) which cooperates with an implant interface (I), wherein said lower interface (22) has, in the bottom portion, an anti-rotational element (21) and, in the upper portion (23), the lower surface has a transmucosal region (23); and
- an intermediate region (3) comprising an abutment (31) supported by a tapered seating region (32) which is attached to the upper end of the transmucosal region (23), wherein said abutment (31) has a top surface (33),
the component (1) being **characterized in that** it comprises an upper region (4) defined by at least one upper interface structure (41) comprising a hole (O) for coupling a screw (5, 51) that cooperates with the implant (I),
wherein the upper interface (41) comprises at least one vertical facet (46);
wherein the joining portion between the intermediate region (3) and the upper region (4) configures a cutting location to separate the upper region (4) from the abutment (31),
wherein at least one perimeter groove (35) of the abutment (31) configures a cut-off marking to adjust the height of the abutment (31), and
wherein the intermediate region (3) and the upper region (4) of the multifunctional component (1) comprise a surface treated with a material that enables scanning with intraoral or benchtop scanning equipment.

2. Multifunctional prosthetic component according to claim 1, **characterized in that** it is used as a conventional closed tray transfer, a conventional open tray transfer, a scanbody and a temporary abutment.

3. Multifunctional prosthetic component according to claim 1, **characterized in that** said abutment (31) comprises: a body of substantially tapered shaped supported by the tapered seating region (32); at least one top surface (33); at least one perimeter groove (35) and at least one substantially vertical facet (34).

4. Multifunctional prosthetic component according to claims 1 and 3, **characterized in that** the upper interface structure (41) comprises at least one neck (42) linked to the top surface (33), wherein said neck (42) supports at least one substantially trapezoidal body (43) which supports a substantially cylindrical body with a flat top surface (45).

5. Multifunctional prosthetic component according to claim 1, **characterized in that** the upper interface (41) comprises at least one groove (44) on its median horizontal axis.

6. Multifunctional prosthetic component according to claim 1, **characterized in that** at least one vertical facet (46) of the upper interface (41) is vertically aligned with the facet (34) of the abutment (31).

7. Multifunctional prosthetic component according to claims 1 and 6, **characterized in that** at least one vertical facet (46) of the upper interface (41) is rotationally indexed with the anti-rotational element (21) along the longitudinal axis of the component (1).

8. Multifunctional prosthetic component according to claim 1, **characterized in that** the lower interface geometry (22) comprises one of the following interfaces: morse cone, external hexagon, or internal hexagon.

9. Multifunctional prosthetic component according to claim 1, **characterized in that** the intermediate region (3) and the upper region (4) of the multifunctional component (1) have a microscopically modified surface to enable geometric recognition when using intraoral or benchtop scanning equipment.

10. Multifunctional prosthetic component according to claim 1, **characterized in that** the facets (34) of the abutment (31) are vertical from the top (33) to its medial portion, wherein in the lower portion, from the medial portion of the abutment (31), such facets (34) begin to be softly concave (341) until they reach the tapered seating region (32).

11. Multifunctional prosthetic component according to claims 1 and 7, **characterized in that** at least one facet (34) of the abutment (31) is indexed to at least one face of the anti-rotational element (21) of the lower region (2).

12. Multifunctional prosthetic component according to any one of claims 1 to 13, **characterized in that** the upper portion (310) of the abutment (31) has a smaller cross-section than the cross-section of the region located below the perimeter groove (35).

13. Multifunctional prosthetic component according to claims 1 and 5, **characterized in that** it also comprises a positioner cap (6) comprising, on its inner wall, of at least one perimeter shoulder (61) that cooperates with the groove (44) of the upper interface (41) of the multifunctional component (1), when using a closed tray impression technique.

14. Multifunctional prosthetic component according to claim 13, **characterized in that** the perimeter shoulder (61) of the positioner cap (6) cooperates with the groove (44) of the upper interface (41) by one of the following means: interference, pressure, or male-female coupling.

15. Multifunctional prosthetic component according to claim 1, **characterized in that** it comprises a long screw (51) for attaching the multifunctional component (1) to the implant (I) when using an open tray impression technique.

16. Multifunctional prosthetic component for conventional or digital flow of dental implant prosthesis installation, comprising a component (10) removably attached to an implant (I) or analog, comprising:
- a lower region (2) comprising a lower interface geometry (22) cooperating with the implant interface (I), wherein the bottom (21) of said lower interface (22) is linked to an anti-rotational element, and the top (23) of said lower interface (22) is linked to a transmucosal region; and
- an intermediate region (3) comprising an s abutment (31) supported by a tapered seating region (32) which is attached to the upper end of the transmucosal region (23), wherein said abutment (31) has a top surface (33) and comprises at least one substantially vertical facet (34);
- a screw (5, 51),
the component (10) is **characterized in that** it comprises:
- an upper region (4) defined by at least one upper interface (41) structure comprising at least one groove (44), and a hole (O) for coupling a screw (5, 51) that cooperates with the implant (I), since the upper interface (41) comprises at least one vertical facet (46), and
- a positioner cap (7) attached to the Upper surface (45) of the interface (41) by means of breakable structures (71), wherein said positioner cap (7) has on its inner wall at least one perimeter shoulder that cooperates with the groove (44) of the upper interface (41) of the multifunctional component (1) when the multifunctional component (10) is pressed against the positioner cap (7) and the breakable structures (71) break, allowing the component (1, 10) to move until the positioner cap (7) is properly coupled to the upper interface (41);
wherein the union portion between the intermediate region (3) and the upper region (4) configures a cutting location to separate the upper region (4) from the temporary abutment (31).

17. Multifunctional prosthetic component according to claim 16, **characterized in that** said abutment (31) comprises: a substantially truncated conical shaped body supported by the conical abutment (32); at least one top surface (33); at least one perimeter recess (35) and at least one substantially vertical facet (34).

18. Multifunctional prosthetic component according to claims 16 and 17, **characterized in that** the upper interface structure (41) comprises at least one neck (42) linked to the top surface (33), wherein said neck (42) supports at least one substantially trapezoidal body (43) which supports a substantially cylindrical body with a flat top surface (45).

19. Multifunctional prosthetic component according to claim 16, **characterized in that** that the upper interface (41) comprises at least one groove (44) on its median horizontal axis.

20. Multifunctional prosthetic component according to claim 16, **characterized in that** at least one vertical facet (46) of the upper interface (41) is vertically aligned with the facet (34) of the abutment (31).

21. Multifunctional prosthetic component according to claims 16 and 20, **characterized in that** at least one vertical facet (46) of the upper interface (41) is rotationally indexed with the anti-rotational element (21) along the longitudinal axis of the component (10).

22. Multifunctional prosthetic component according to claim 16, **characterized in that** at least one perimeter groove (35) of the abutment (31) configures a cut-off marking to adjust the height of the abutment (31).

23. Multifunctional prosthetic component according to claim 16, **characterized in that** the lower interface geometry (22) comprises one of the following interfaces: morse cone, external hexagon, or internal hexagon.

24. Multifunctional prosthetic component according to claim 16, **characterized in that** the intermediate region (3) and the upper region (4) of the multifunctional component (10) comprise a surface treated with a material that enables scanning with intraoral or benchtop scanning equipment.

25. Multifunctional prosthetic component according to claim 16, **characterized in that** the intermediate region (3) and the upper region (4) of the multifunctional component (10) have a microscopically modified surface to enable geometric recognition when using intraoral or benchtop scanning equipment.

26. Multifunctional prosthetic component according to claim 16, **characterized in that** the facets (34) of the abutment (31) are vertical from the top (33) to its medial portion, wherein the lower portion, from the medial portion of the abutment (31), such facets (34) begin to be softly concave (341) until they reach the tapered seating region (32).

27. Multifunctional prosthetic component according to claims 16 and 26, **characterized in that** at least one facet (34) of the abutment (31) is indexed to at least one face of the anti-rotational element (21) of the lower region (2).

28. Multifunctional prosthetic component according to any one of claims 16 to 27, **characterized in that** the upper portion (310) of the abutment (31) has a smaller cross section than the cross section of the region located below the perimeter groove (35).

29. Method of immediate loading prosthesis installation through the conventional open tray workflow using the multifunctional prosthetic component (1, 10) as defined in claims 1 to 28, **characterized in that** it comprises the following steps:
- (100) Install the implant (I) in the surgical alveolus;
- (105) Attach the component (1) to the implant (I) using the long screw (51);
- (110) Create an impression of the patient's arch using an open tray filled with a dental impression composition;
- (115) After the appropriate waiting period, remove the long screw (51);
- (120) Remove the tray containing the multifunctional component (1, 10) from inside the patient's mouth;
- (125) Optional step: install a healing abutment or cover screw on the implant (I) while the temporary prosthesis is being produced;
- (130) Start of the prosthetic procedure: attach an analog to the multifunctional component (1, 10) and cast gypsum to make the model of the patient's dental arch;
- (135) After the waiting period, remove the gypsum model containing the analog from inside the impression mold, the multifunctional component (1, 10) remaining attached to the model;
- (140) Remove the component (1, 10) from the impression mold;
- (145) With the aid of an appropriate dental tool, cut the top surface (33) of the multifunctional component (1, 10) to make the abutment (31) have a height of 6 mm, or make said cut in the groove (35) to make the abutment (31) have a height of 4 mm;
- (150) Make and attach the temporary prosthesis to the multifunctional component (1, 10) already shaped as a temporary abutment (31), being this the end of the prosthetic procedure;
- (155) Only if the step (125) was performed: remove the healing abutment or cover screw from the implant (I);
- (160) By cementing or screwing, attach the multifunctional component (1, 10), acting as a temporary abutment, to the implant (I).

30. Method of immediate loading prosthesis installation through the closed tray conventional workflow using the multifunctional prosthetic component (1, 10) as defined in claims 1 to 28, **characterized in that** it comprises the following steps:
- (100) Install the implant (I) in the surgical alveolus;
- (205) Attach the component (1, 10) to the implant (I) using the screw (5);
- (210) Couple the positioner cap (6) to the component (1, 10);
- (215) Create impression using a closed tray;
- (220) Remove, from inside the patient's mouth, the tray containing the positioner cap (6);
- (225) Remove the screw (5) and component (1, 10) from the implant (I);
- (230) Optional step: install a healing abutment or cover screw on the implant (I) while the temporary prosthesis is being produced;
- (235) Start of the prosthetic procedure: attach an analog to the multifunctional component (1, 10);
- (240) Couple the 'component (1, 10) + analog' set to the positioner cap (6) located inside the model, and cast the gypsum;
- (245) Remove the gypsum model from inside the mold;
- (250) Uncouple the component (1, 10) from the analog that was attached to the model;
- (255) With the aid of an appropriate dental tool, cut the top surface (33) of the multifunctional component (1, 10) to make the abutment (31) have a height of 6 mm, or make said cut in the groove (35) until the abutment (31) have a height of 4 mm;
- (260) Make and/or attach the temporary prosthesis to the multifunctional component (1, 10) already shaped as a temporary abutment (31), being this the end of the prosthesis step;
- (265) Only if step (230) was performed: remove the healing abutment or cover screw from the implant (I);
- (270) By cementing or screwing, attach the multifunctional component (1, 10), acting as a temporary abutment, to the implant (I).

31. Method of immediate loading prosthesis installation through a fast workflow using the multifunctional prosthetic component as defined in claims 1 to 28, **characterized in that** it comprises the following steps:
- (100) Install the implant (I) in the surgical alveolus;
- (305) With the aid of an appropriate dental tool, cut the top surface (33) of the multifunctional component (1, 10) to make the resulting temporary abutment (31) have a height of 6 mm, or make said cut in the recess (35) to make the abutment (31) have a height of 4 mm;
- (310) Make and/or attach the temporary prosthesis to an already formed multifunctional component (1, 10) already shaped as a temporary abutment (31);
- (315) By cementing or screwing, attach the multifunctional component (1, 10), acting as a temporary abutment, to the implant (I).

32. Method of immediate loading prosthesis installation through a digital workflow using an intraoral scanner and the multifunctional prosthetic component (1, 10) as defined in claims 1 to 28, **characterized in that** it comprises the following steps:
- (100) Install the implant (I) in the surgical alveolus;
- (405) Attach the component (1, 10) to the implant (I) using the screw (5);
- (410) Scan the patient's dental arch using an intraoral scanner;
- (415) Remove the screw (5) and the component (1, 10) from the implant (I);
- (420) Optional step: install a healing abutment or cover screw on the implant (I) while the temporary prosthesis is being produced;
- (425) Start of the prosthetic procedure: make the digital design of the temporary prosthesis using a computer and an appropriate software;
- (430) Produce the temporary prosthesis on a milling machine or 3D printer;
- (435) With the aid of an appropriate dental tool, cut the top surface (33) of the multifunctional component (1, 10) to make the resulting temporary abutment (31) have a height of 6 mm, or make said cut in the roove (35) to make the abutment (31) have a height of 4 mm;
- (440) Attach the temporary prosthesis to the component (1, 10) already shaped as a temporary abutment (31), being this the end of the prosthetic procedure;
- (445) Only if step (420) was perfomed: remove the healing abutment or cover screw from the implant (I);
- (450) By cementing or screwing, attach the multifunctional component (1, 10), acting as a temporary abutment, to the implant (I).

33. Method of immediate loading prosthesis installation through the digital workflow using open tray and a benchtop scanner, using the multifunctional prosthetic component (1, 10) as defined in claims 1 to 28, **characterized in that** it comprises the following steps:
- Install the implant (I) in the surgical alveolus;
- (505) Attach the component (1, 10) to the implant (I) using the long screw (51);
- (510) Create an impression using an open tray;
- (515) Remove the long screw (51);
- (520) Remove the tray containing the component (1, 10) from inside the patient's mouth;
- (525) Optional step: install a healing abutment or cover screw on the implant (I) while the temporary prosthesis is being made;
- (530) Start of the prosthetic procedure: attach an analog to the component (1), and cast the gypsum;
- (535) Remove the gypsum model containing the analog from inside the mold, in which component (1, 10) remains attached;
- (540) Remove the component (1, 10) from the impression;
- (545) Couple the component (1, 10) to the analog to act as a scanbody, and scan the model using a benchtop scanner;
- (550) Digitally create the digital the temporary prosthesis using a computer and an appropriate software;
- (555) Produce the temporary prosthesis on a milling machine or 3D printer;
- (560) With the aid of an appropriate dental tool, cut the the top surface (33) of the multifunctional component (1, 10) to make the resulting temporary abutment (31) have a height of 6 mm, or make said cut in the groove (35) until the abutment (31) have a height of 4 mm;
- (565) Attach the temporary prosthesis to the component (1, 10) already shaped as a temporary abutment (31), being this the end of the prosthetic prosthesis;
- (570) Only if step (525) was performed: remove the healing abutment or cover screw from the implant (I);
- (575) By cementing or screwing, attach the multifunctional component (1, 10), acting as a temporary abutment, to the implant (I).

34. Method of immediate loading prosthesis installation through the digital workflow using a closed tray technique and a benchtop scanner, and using the multifunctional prosthetic component (1, 10) as defined in claims 1 to 28, **characterized in that** it comprises the following steps:
- (100) Install the implant (I) in the surgical alveolus;
- (605) Attach the component (1, 10) to the implant (I) using the screw (5);
- (610) Couple the positioner cap (6) to the component (1, 10);
- (615) Create the impression using a closed tray;
- (620) Remove, from inside the patient's mouth, the tray containing the positioner cap (6);
- (625) Remove the screw (5) and the component (1, 10) from the implant (I);
- (630) Optional step: install a healing abutment or cover screw on the implant (I) while the temporary prosthesis is being made;
- (635) Start of the prosthetic procedure: attach an analog to the component (1, 10);
- (640) Couple the 'component (1, 10) + analog' set to the positioner cap (6) that is inside the model, and cast the gypsum;
- (645) Remove the gypsum model from inside the mold;
- (650) Scan the model having component (1, 10) acting as a scanbody, using a benchtop scanner;
- (655) Uncouple the component (1, 10) from the analog that was attached to the model;
- (660) Create the digital temporary prosthesis using a computer and an appropriate software;
- (665) Produce the temporary prosthesis on a milling machine or 3D printer;
- (670) With the aid of an appropriate dental tool, cut the top surface (33) of the multifunctional component (1, 10) to make the temporary abutment (31) have a height of 6 mm, or make said cut in the groove (35) to make the abutment (31) have a height of 4 mm;
- (675) Attach the temporary prosthesis to the component (1, 10) already shaped as a temporary abutment (31), being this the end of the prosthetic phase;
- (680) Only if step (630) was performed: remove the healing abutment or cover screw from the implant (I);
- (685) By cementing or screwing, attach the multifunctional component (1, 10), acting as a temporary abutment, to the implant (I).

35. Method of two-step dental prosthesis installation through the open tray conventional workflow using the multifunctional prosthetic component (1, 10) as defined in claims 1 to 28, **characterized in that** it comprises the following steps:
- (700) Install the implant (I) in the surgical alveolus for a two-step procedure; afterwards install a healing abutment or cover screw on the implant (I), and wait until the appropriate osseointegration period for has elapsed;
- (705) At the end of the osseointegration period, remove the healing abutment or cover screw from the implant (I);
- (710) Attach the component (1, 10) to the implant (I) using the long screw (51);
- (715) Create an open tray impression;
- (720) Remove the long screw (51);
- (725) Remove the tray containing the component (1, 10) from inside the patient's mouth;
- (730) Optional step: reinstall the healing abutment or cover screw on the implant (I) until the permanent prosthesis has been made;
- (735) Start of the prosthesis procedure: attach an analog to component (1), and cast the gypsum;
- (740) Remove the gypsum model containing the analog from inside the mold, in which component (1, 10) remains attached;
- (745) Remove the component (1, 10) from the impression mold;
- (750) Select the most appropriate prosthetic component for the case;
- (755) Produce and attach the permanent prosthesis on the chosen prosthetic component, being this the end of the prosthetic procedure;
- (760) Only if step (730) was performed: remove the healing abutment or cover screw from the implant (I);
- (765) By cementing or screwing, attach the component containing the permanent prosthesis to the implant (I).

36. Method of two-step dental prosthesis installation through the conventional closed tray workflow, using the multifunctional prosthetic component (1, 10) as defined in claims 1 to 28, **characterized in that** it comprises the following steps:
- (700) Install the implant (I) in the surgical alveolus for the two-step procedure; install a healing abutment or cover screw on the implant (I), and wait until the appropriate osseointegration period has elapsed;
- (805) At the end of the osseointegration period, remove the healing abutment or cover screw from the implant (I);
- (810) Attach the component (1, 10) to the implant (I) using the screw (5);
- (815) Couple the positioner cap (6) to the component (1, 10);
- (820) Create the impression using a closed tray;
- (825) Remove, from inside the patient's mouth, the tray containing the positioner cap (6);
- (830) Remove the screw (5) and the component (1, 10) from the implant (I);
- (835) Optional step: reinstall the healing abutment or cover screw on the implant (I) until the permanent prosthesis has been produced;
- (840) Start of the prosthetic procedure: attach an analog to the component (1);
- (845) Couple the 'component (1, 10) + analog' set to the positioner cap (6) that is inside the impression mold, and cast the gypsum;
- (850) Remove the gypsum model from inside the mold;
- (855) Uncouple the component (1, 10) from the analog that was attached to the model;
- (860) Select the most appropriate prosthetic component for the case;
- (865) Produce and attach the permanent prosthesis to the prosthetic component, being this the end of the prosthetic phase;
- (870) Only if step (835) was performed: remove the healing abutment or cover screw from the implant (I);
- (875) By cementing or screwing, attach the component containing the permanent prosthesis to the implant (I).

37. Method of two-step dental prosthesis installation through the digital open tray workflow using a benchtop scanner and the multifunctional prosthetic component (1, 10) as defined in claims 1 to 28, **characterized in that** it comprises the following steps:
- (700) Install the implant (I) in the surgical alveolus for a two-step procedure; install a healing abutment or cover screw on the implant (I), and wait until the appropriate osseointegration period for has elapsed;
- (1000) At the end of the osseointegration period, remove the healing abutment or cover screw from the implant (I);
- (1005) Attach the component (1, 10) to the implant (I) using the long screw (51);
- (1010) Create the open tray impression;
- (1015) Remove the long screw (51);
- (1020) Remove the tray containing the component (1, 10) from inside the patient's mouth;
- (1025) Optional step: reinstall the healing abutment or cover screw on the implant (I) until the permanent prosthesis has been produced;
- (1030) Start of the prosthetic procedure: attach an analog to the component (1, 10) and cast the gypsum;
- (1035) Remove the gypsum model containing the analog from inside the mold, in which component (1, 10) remains attached;
- (1040) Remove the component (1, 10) from the impression mold;
- (1045) Couple the component (1, 10) to the analog to act as a scanbody, and scan the model using a benchtop scanner;
- (1050) Create the digital permanent prosthesis using a computer and an appropriate software;
- (1055) Produce the permanent prosthesis on a milling machine or 3D printer;
- (1060) Select the most appropriate abutment for the case;
- (1065) Attach the permanent prosthesis to the selected abutment, being this the end of the prosthetic phase;
- (1070) Only if step (1025) was performed: remove the healing abutment or cover screw from the implant (I);
- (1075) By cementing or screwing, attach the component containing the permanent prosthesis to the implant (I).

38. Method of two-step dental prosthesis installation through the digital closed tray workflow using a benchtop scanner and the multifunctional prosthetic component (1, 10) as defined in claims 1 to 28, **characterized in that** it comprises the following steps:
- (700) Install the implant (I) in the surgical alveolus for a two-step procedure; install a healing abutment or cover screw on the implant (I), and wait until the appropriate osseointegration period for has elapsed;
- (1100) At the end of the osseointegration period, remove the healing abutment or cover screw from the implant (I);
- (1105) Attach the component (1, 10) to the implant (I) using the screw (5);
- (1110) Couple the positioner cap (6) to the component (1, 10);
- (1115) Create the closed tray impression;
- (1120) Remove, from inside the patient's mouth, the tray containing the attached positioner cap (6);
- (1125) Remove the screw (5) and the component (1, 10) from the implant (I);
- (1130) Optional step: install a healing abutment or cover screw on the implant (I) until the permanent prosthesis has been produced;
- (1135) Start of the prosthetic procedure: attach an analog to the component (1, 10);
- (1140) Couple the 'component (1, 10) + analog' set to the positioner cap (6) that is inside the mold, and cast the gypsum;
- (1145) Remove the gypsum model containing the analog from inside the impression mold, in which the component (1, 10) remains coupled;
- (1150) Scan the model which has the component (1, 10) acting as a scanbody, using a benchtop scanner;
- (1155) Uncouple the component (1, 10) from the analog that was attached to the model;
- (1160) Create a digital permanent prosthesis using a computer and an appropriate software;
- (1165) Produce the permanent prosthesis on a milling machine or 3D printer;
- (1170) Select the appropriate prosthetic component for the case;
- (1175) Attach the permanent prosthesis on the selected prosthetic component, being that the end of the prosthetic procedure;
- (1180) Only if step (1130) was performed: remove the healing prosthetic component or cover screw from the implant (I);
- (1185) By cementing or screwing, attach the component containing the permanent prosthesis to the implant (I).
